(19) Europäisches Patentamt
European Patent Office
Office européen des brevets

(11) EP 2 485 040 A1

(12) EUROPEAN PATENT APPLICATION
published in accordance with Art. 153(4) EPC

(43) Date of publication:
08.08.2012 Bulletin 2012/32

(51) Int Cl.:
$G01N\ 21/64^{(2006.01)}$   $G01N\ 15/14^{(2006.01)}$

(21) Application number: 10820079.1

(86) International application number:
PCT/JP2010/005570

(22) Date of filing: 13.09.2010

(87) International publication number:
WO 2011/039953 (07.04.2011 Gazette 2011/14)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 29.09.2009 JP 2009223631

(71) Applicant: Mitsui Engineering & Shipbuilding Co.,
Ltd.
Chuo-ku
Tokyo 104-8439 (JP)

(72) Inventors:
• NAKADA, Shigeyuki
Tamano-shi
Okayama 706-8651 (JP)
• HAYASHI, Hironori
Tamano-shi
Okayama 706-8651 (JP)
• HOSHISHIMA, Kazuteru
Tamano-shi
Okayama 706-8651 (JP)

(74) Representative: Hards, Andrew et al
Global IP Europe
Patentanwaltskanzlei
Prinzregentenstraße 11a
80538 München (DE)

(54) **METHOD AND DEVICE FOR FRET MEASUREMENT**

(57)   Among donor molecules labeling protein in living cells to be measured, the rate of donor molecules binding to an acceptor molecule and occurring FRET is determined. In a plurality of previous measurement samples having different ratios of first molecule concentration to second molecule concentration, a fluorescence lifetime of the first molecule are calculated and the fluorescence lifetime minimum value of the first molecule is calculated. The samples are irradiated with a laser beam having time-modulated intensity and the fluorescence emitted by the laser-irradiated measurement samples are measured. By using the fluorescent signals thus measured, the fluorescence lifetime of the first molecule is calculated. By using the fluorescence lifetime minimum value of the first molecule and the fluorescence lifetime of the first molecule that is calculated above, the rate of the first molecules occurring FRET in the first molecules in the measurement samples is calculated.

FIG.5

EP 2 485 040 A1

**Description**

Technical Field

The present invention relates to a method and device for measuring FRET (Fluorescence Resonance Energy Transfer) in which a donor molecule (first molecule) absorbs energy by irradiation with laser light, and the energy is transferred from the donor molecule to an acceptor molecule (second molecule). More specifically, the present invention relates to a FRET measurement technology for measuring interaction between a pair of the donor molecule and the acceptor molecule using fluorescence.

Background Art

Analysis of protein functions has recently become important as post-genome related technology in the medical, pharmaceutical, and food industries. Particularly, in order to analyze actions of cells, it is necessary to research interactions (binding and separation) between protein and another protein or a low molecule compound which are living substances in a living cell.
The interactions between protein and another protein or a low molecule compound have been analyzed using a fluorescence resonance energy transfer (FRET) phenomenon. Interactions between molecules within a range of several nanometers can be measured by measuring fluorescence generated by the FRET phenomenon.

For example, there has been known a technique for obtaining a FRET efficiency illustrating the degree of energy transfer from the donor molecule to the acceptor molecule with the use of a fluorescence lifetime $\tau^*_d$ of the donor molecule at the time of occurrence of FRET and a fluorescence lifetime $\tau_d$ of the donor molecule at the time of absence of the acceptor molecule (Patent Document 1).
In the Patent Document 1, the FRET efficiency is obtained by $1 - \tau^*_d/\tau_d$.

Citation List

Patent Literature

Patent Document 1: Japanese Patent Application Laid-Open No. 2007-240424

Summary of Invention

Technical Problem

However, since the FRET efficiency is influenced by the ratio of the concentration of the acceptor molecule to that of the donor molecule, it is difficult to quantitatively obtain strength of interaction of protein contained in cells with the use of the above technique.
Thus, the present invention provides a FRET measurement method and device which can quantitatively perform FRET measurement without being influenced by the ratio of the concentration of an acceptor molecule to that of a donor molecule.

Solution to Problem

In order to solve the problem, the present invention is a FRET measurement method, which comprises irradiating with laser light a measurement sample labeled with a first molecule and a second molecule and measuring FRET (Fluorescence Resonance Energy Transfer) in which energy transfers from the first molecule to the second molecule, comprising: a shortest fluorescence lifetime calculation step of calculating fluorescence lifetimes of the first molecule with respect to a plurality of previous measurement samples with different ratios between a concentration of the first molecule and a concentration of the second molecule to calculate a fluorescence lifetime minimum value of the first molecule; an irradiation step of irradiating the measurement sample with laser light with a time-modulated intensity; a measurement step of measuring fluorescence emitted by the measurement sample irradiated with the laser light; a step of calculating a fluorescence lifetime of the first molecule by using a fluorescence signal measured in the measurement step; and a FRET occurrence rate calculation step of calculating a rate of FRET occurring first molecules among first molecules in the measurement sample with the use of the fluorescence lifetime minimum value of the first molecule calculated in the shortest fluorescence lifetime calculation step and the calculated fluorescence lifetime of the first molecule.

In the FRET occurrence rate calculation step, the rate is obtained by further using a fluorescence lifetime of the first molecule at the time of absence of the second molecule

The FRET measurement method further comprising an observation matrix calculation step of calculating a matrix used for obtaining, from the fluorescence signal measured in the measurement step, information of fluorescence emitted by the first molecule and information of fluorescence emitted by the second molecule, the first and second molecules emitting fluorescence by irradiation with laser light in the irradiation step, wherein the observation matrix calculation step comprises: a first step of obtaining a portion of the component of the matrix by using a fluorescence signal which is measured by irradiating with laser light with a time-modulated intensity a plurality of samples, each sample including the first molecule but not including the second molecule and having different concentrations of the first molecule, and a second step of obtaining a portion of the component of the matrix by using a fluorescence signal which is measured by irradiating with laser light with a time-modulated intensity a plurality of samples, each sample including the second molecules but not including the first molecule and having different concentrations of the second molecule.

The FRET measurement method further comprising a dissociation constant calculation step of calculating a dissociation constant representing the degree of binding between the first molecule and the second molecule with the use of the rate calculated in the FRET occurrence rate calculation step.

In the step of calculating the fluorescence lifetime of the first molecule, the fluorescence lifetime of the first molecule is calculated using a phase difference between the fluorescence signal measured in the measurement step and a modulation signal modulating the laser light.

In the first step, each of the plurality of the samples including the first molecule but not including the second molecule and having different concentrations of the first molecule is irradiated with laser light with a time-modulated intensity, and a portion of the component of the matrix is obtained using an amplitude of the measured fluorescence signal and a phase difference between the fluorescence signal and a modulation signal modulating the laser light,

in the second step, each of the plurality of the samples including the second molecule but not including the first molecule and having different concentrations of the second molecule is irradiated with laser light with a time-modulated intensity, and a portion of the component of the matrix is obtained using an amplitude of the measured fluorescence signal and a phase difference between the fluorescence signal and a modulation signal modulating the laser light.

The FRET measurement method further comprising: a first molecule concentration calculation step of calculating the concentration of the first molecule with the use of the information of fluorescence emitted by the first molecule; and a second molecule concentration calculation step of calculating the concentration of the second molecule with the use of the information of fluorescence emitted by the second molecule, wherein in the dissociation constant calculation step, the dissociation constant is calculated using the concentration of the first molecule calculated in the first molecule concentration calculation step and the concentration of the second molecule calculated in the second molecule concentration calculation step.

Moreover, in order to solve the problem, the present invention is a FRET measurement device, which measures FRET (Fluorescence Resonance Energy Transfer) in which a measurement sample labeled with a first molecule and a second molecule is irradiated with laser light and energy is transferred from the first molecule to the second molecule, comprising: a laser light source unit which irradiates the measurement sample with laser light with a time-modulated intensity; a measurement unit which measures fluorescence emitted by the measurement sample irradiated with the laser light; a fluorescence lifetime calculating unit which calculates a fluorescence lifetime of the first molecule with the use of a fluorescence signal measured by the measurement unit; a shortest fluorescence lifetime calculating unit which calculates a fluorescence lifetime minimum value of the first molecule with the use of fluorescence lifetimes of the first molecule in a plurality of previous measurement samples with different ratios between a concentration of the first molecule and a concentration of the second molecule; and a FRET occurrence rate calculating unit which calculates a rate of FRET occurring first molecules among first molecules in the measurement sample with the use of the fluorescence lifetime minimum value of the first molecule calculated by the shortest fluorescence lifetime calculation unit and the fluorescence lifetime of the first molecule calculated by the fluorescence lifetime calculation unit.

The FRET occurrence rate calculation unit obtains the rate by further using a fluorescence lifetime of the first molecule at the time of absence of the second molecule.

The FRET measurement device further comprising an observation matrix calculation unit which calculates a matrix used for obtaining, from the fluorescence signal measured by the measurement unit, the information of fluorescence emitted by the first molecule and the information of fluorescence emitted by the second molecule, the first and second molecules emitting fluorescence by irradiating the measurement sample with laser light, wherein the observation matrix calculation unit obtains a portion of the component of the matrix with the use of the fluorescence signal which is measured by the measurement unit by irradiating with laser light with a time-modulated intensity a plurality of samples including the first molecule but not including the second molecule and having different concentrations of the first molecule and obtains a portion of the component of the matrix with the use of the fluorescence signal which is measured by the measurement unit by irradiating with laser light with a time-modulated intensity a plurality of samples including the second molecule but not including the first molecule and having different concentrations of the second molecule.

The FRET measurement device further comprising a dissociation constant calculating unit which calculates a dissociation constant representing the degree of binding between the first molecule and the second molecule with the use of the rate calculated by the FRET occurrence rate calculating unit.

The fluorescence lifetime calculating unit calculates the fluorescence lifetime of the first molecule with the use of a phase difference between the fluorescence signal measured by the measurement unit and a modulation signal modulating the laser light.

The observation matrix calculating unit obtains a portion of the component of the matrix with the use of an amplitude of the fluorescence signal measured by the measurement unit and a phase difference between the fluorescence signal and a modulation signal modulating the laser light, by irradiating with laser light with a time-modulated intensity the plurality of the samples including the first molecule but not including the second molecule and having different concentrations of the first molecule and obtains a portion of the component of the matrix with the use of an amplitude of the fluorescence signal measured by the measurement unit and a phase difference between the fluorescence signal and a modulation signal modulating the laser light, by irradiating with laser light with a time-modulated intensity the plurality of the samples including the second molecule but not including the first molecule and having different concentrations of the second molecule.

The FRET measurement device further comprising: a first molecule concentration calculating unit which calculates the concentration of the first molecule with the use of the information of fluorescence emitted by the first molecule; and a second molecule concentration calculating unit which calculates the concentration of the second molecule with the use of the information of fluorescence emitted by the second molecule, wherein the dissociation constant calculating unit calculates the dissociation constant by using the concentration of the first molecule calculated by the first molecule concentration calculating unit and the concentration of the second molecule calculated by the second molecule concentration calculating unit.

Advantageous Effects of Invention

According to the FRET measurement method and device of the present invention, FRET measurement can be quantitatively performed without being influenced by the ratio of the concentration of an acceptor molecule to that of a donor molecule.

Brief Description of Drawings

FIG. 1 is a schematic configuration diagram of a flow cytometer as an embodiment of a FRET measurement device according to the present invention.
FIG. 2 is a view illustrating an example of the energy absorption spectrum and fluorescence emission spectrum of a donor molecule and an acceptor molecule.
FIG. 3 is a schematic configuration diagram illustrating an example of a measurement unit of the flow cytometer illustrated in FIG. 1.
FIG. 4 is a schematic configuration diagram illustrating an example of a control and processing section of the flow cytometer illustrated in FIG. 1.
FIG. 5 is a schematic configuration diagram illustrating an example of an analysis device of the flow cytometer illustrated in FIG. 1.
FIG. 6 is a view illustrating an example of a flowchart of FRET measurement;
FIG. 7 is a view illustrating a relationship between FRET efficiency and $\alpha$.
FIG. 8 is a diagram illustrating a model of dynamics of fluorescence emission at the time when FRET occurs.
FIG. 9 is a view illustrating a measurement example of an observation matrix.
FIG. 10 is an example of a flowchart of measuring a maximum FRET efficiency and the shortest fluorescence lifetime.
FIG. 11 is an example of a flowchart of measuring the observation matrix.
FIG. 12 is an example of a flowchart of sample measurement.

Description of Embodiments

<Schematic configuration of FRET measurement device>

Hereinafter, the FRET measurement method and device according to the present invention will be described in detail.

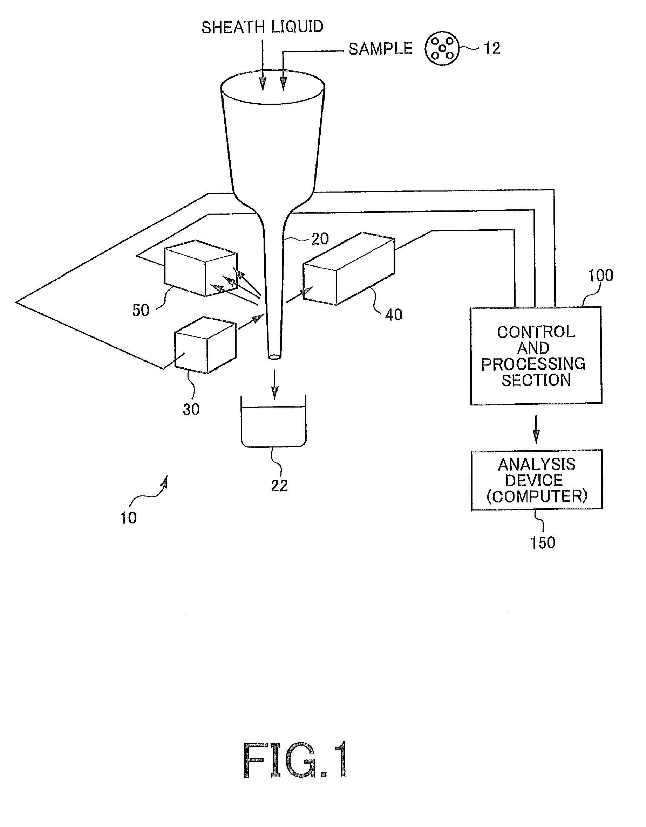

FIG. 1 is a schematic configuration diagram of a flow cytometer 10 as an embodiment of the FRET measurement device according to the present invention.

The flow cytometer 10 according to the present invention irradiates with laser light a sample 12 (measurement sample) obtained by labeling each of some proteins in a living cell to be measured with a donor molecule and an acceptor molecule and measures fluorescence emitted by the sample 12. By virtue of the use of a measured fluorescent signal, the flow cytometer 10 obtains $\kappa_{FRET}$ that is the rate of the donor molecules in which FRET occurs among the donor molecules. The flow cytometer 10 further obtains a concentration of the donor molecule, a concentration of the acceptor molecule, values of a dissociation constant $K_d$, and so on. As illustrated in FIG. 1, the flow cytometer 10 is provided with a tube line 20, a laser light source unit 30, measurement units 40 and 50, a control and processing section 100, and an analysis device 150.

The sample 12 flows through the tube line 20 with a sheath liquid that forms a highspeed flow. A recovery container 22 which recovers the sample 12 is disposed at the outlet of the tube line 20.

The laser light source unit 30 irradiates with laser light with a time-modulated intensity to the sample 12. The sample 12 is irradiated with laser light, whereby the donor molecule and the acceptor molecule each absorbs the energy. For example, when the donor molecule is CFP (Cyan Fluorescent Protein) and the acceptor molecule is YFP (Yellow Fluorescent Protein), laser light having a wavelength of 405 to 440 nm at which the donor molecule mainly absorbs the energy is used. The laser light source unit 30 is a semiconductor laser, for example. The output of the laser light emitted by the laser light source unit 30 is 5 mW to 100mW, for example.

A relationship between the wavelength of the laser light emitted by the laser light source unit 30 and the wavelength at which the donor molecule and the acceptor molecule absorb the energy and the occurrence of FRET will be described.

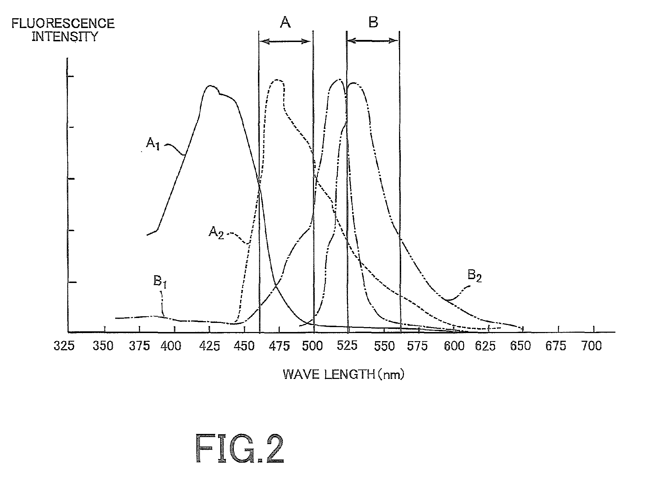

FIG. 2 is a view illustrating an energy absorption spectrum and a fluorescence emission spectrum when the donor molecule is CFP and the acceptor molecule is YFP. A curve $A_1$ is the energy absorption spectrum of the donor molecule, and a curve $A_2$ is the fluorescence emission spectrum of the donor molecule. A curve $B_1$ is the energy absorption spectrum of the acceptor molecule, and a curve $B_2$ is the fluorescence emission spectrum of the acceptor molecule. As illustrated in FIG. 2, a wavelength region where the donor molecule mainly absorbs the energy is 405 nm to 450 nm. A wavelength region where the acceptor molecule mainly absorbs the energy is 470 nm to 530 nm.

In general, when a distance between the donor molecule and the acceptor molecule is not more than 2 nm, a portion of the energy absorbed by the donor molecule by irradiation with laser light transfers to the acceptor molecule by coulomb interaction. The acceptor molecule absorbs the energy transferred from the donor molecule by the coulomb interaction to be thereby excited, and, thus, to emit fluorescence. This phenomenon is referred to as a fluorescence resonance energy transfer (FRET) phenomenon.

FRET occurs also when CFP is used as the donor molecule and YFP is used as the acceptor molecule. Namely, the energy is transferred from the donor molecule to the acceptor molecule by the coulomb interaction, whereby fluorescence due to excitation of the acceptor molecule is emitted.

Further, as illustrated in FIG. 2, the energy absorption spectrum $A_1$ of the donor molecule and the energy absorption spectrum $B_1$ of the acceptor molecule partially overlap each other. Thus, the acceptor molecule emits fluorescence caused by being directly excited by laser light.

Returning to FIG. 1, the measurement unit 40 is disposed so as to be opposite to the laser light source unit 30 with the tube line 20 interposed therebetween. The measurement unit 40 is provided with a photoelectric converter. In response to laser light forwardly scattered by the sample 12 passing through a measurement point, the photoelectric converter outputs a detection signal indicating that the sample 12 is passing through the measurement point. The signal output from the measurement unit 40 is supplied to the control and processing section 100. The signal supplied from the measurement unit 40 to the control and processing section 100 is used as a trigger signal indicating the timing of passage of the sample 12 through the measurement point in the tube line 20.

The measurement unit 50 is disposed on a line of intersection between a plane orthogonal to a direction in which laser light is emitted from the laser light source unit 30 and a plane passing through the measurement point and orthogonal to a direction in which the sample 12 in the tube line 20 moves. The measurement unit 50 is provided with a photoelectric converter. The photoelectric converter receives fluorescence emitted by the sample 12 irradiated with laser light at the measurement point. A photomultiplier and an avalanche photodiode are examples of the photoelectric converter.

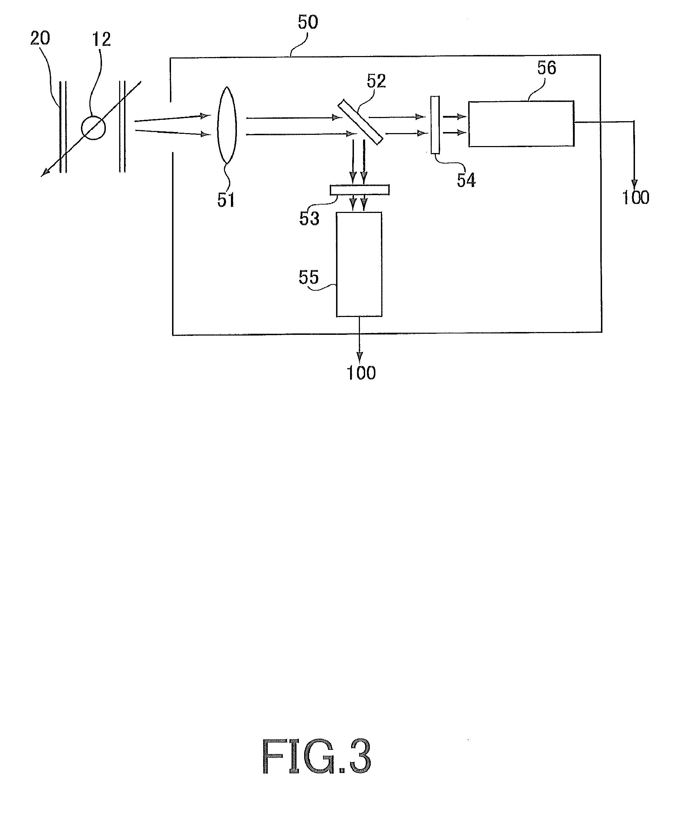

The detail of the configuration of the measurement unit 50 will be described with reference to FIG. 3. As illustrated in FIG. 3, the measurement unit 50 includes a lens system 51, a dichroic mirror 52, band-pass filters 53 and 54, and photoelectric converters 55 and 56.

The lens system 51 focuses fluorescence emitted by the sample 12. In the dichroic mirror 52, the wavelength characteristics of reflection and transmission are determined so that fluorescence emitted by the acceptor molecule is transmitted through the dichroic mirror 52 and fluorescence emitted by the donor molecule is reflected on the dichroic mirror 52.

The band-pass filters 53 and 54 are disposed in front of the light-receiving surface of the photoelectric converters 55 and 56 and transmit only fluorescence within a predetermined wavelength band. More specifically, the band-pass filter 53 is set so as to transmit fluorescence within a wavelength band (indicated by A in FIG. 2) in which fluorescence is emitted mainly by the donor molecule. Meanwhile, the band-pass filter 54 is set so as to transmit fluorescence within a wavelength band (indicated by B in FIG. 2) in which fluorescence is emitted mainly by the acceptor molecule. In the following description, the wavelength band indicated by A in FIG. 2 is referred to as a "donor channel", and the wavelength band indicated by B in FIG. 2 is referred to as an "acceptor channel".

As illustrated in FIG. 2, the curve $A_2$ illustrating the fluorescence emission spectrum of the donor molecule passes the acceptor channel, and the curve $B_2$ illustrating the fluorescence emission spectrum of the acceptor molecule passes the donor channel. Thus, the band-pass filter 53 set so as to transmit fluorescence in the donor channel transmits not only fluorescence emitted by the acceptor molecule but also a slight amount of fluorescence emitted by the acceptor molecule. Similarly, the band-pass filter 54 set so as to transmit fluorescence in the acceptor channel transmits not only fluorescence emitted by the acceptor molecule but also a slight amount of fluorescence emitted by the donor molecule. As described later, the analysis device 150 corrects a fluorescence signal including fluorescence leaking into each channel with the use of the observation matrix and obtains information of fluorescence emitted by the donor molecule and information of fluorescence emitted by the acceptor molecule.

The photoelectric converters 55 and 56 convert received light into an electric signal. The photoelectric converters 55 and 56 are sensors including, for example, a photomultiplier.

A phase of fluorescence received by the photoelectric converters 55 and 56 is delayed with respect to the phase of laser light with modulated intensity. Accordingly, the photoelectric converters 55 and 56 receive a light signal having information of phase difference with respect to the laser light with modulated intensity and convert the light signal into an electric signal. Signals (fluorescence signal) output from the photoelectric converters 55 and 56 are supplied to the control and processing section 100.

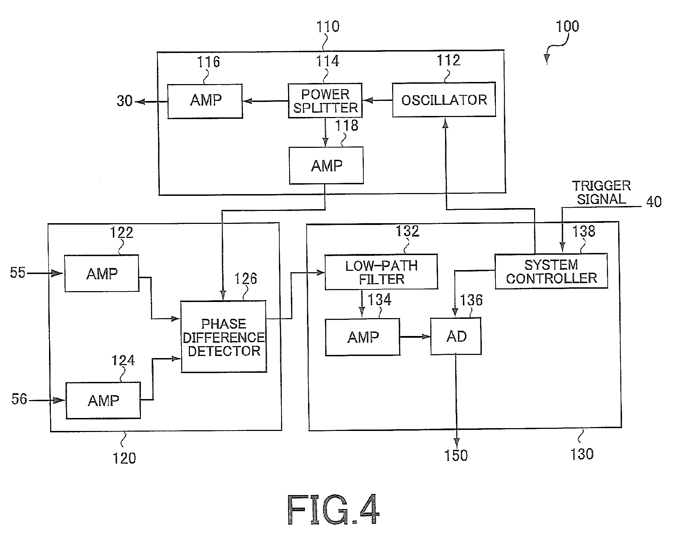

The detail of the configuration of the control and processing section 100 will be described with reference to FIG. 4. As illustrated in FIG. 4, the control and processing section 100 includes a signal generation unit 110, a signal processing unit 120, and a controller 130. The signal generation unit 110 generates a modulation signal for time-modulating the intensity of laser light. The modulation signal is, for example, a sinusoidal wave signal having a predetermined frequency. In this case, the frequency is set in the range of 10 to 100 MHz.

The signal generation unit 110 includes an oscillator 112, a power splitter 114, and amplifiers 116 and 118. The modulation signal generated by the oscillator 112 is split by the power splitter 114 and supplied to the laser light source unit 30 and the signal processing unit 120. As will be described later, the modulation signal is supplied from the control and processing section 100 to the signal processing unit 120 and is used as a reference signal for measuring the phase difference of the fluorescence signal with respect to the modulation signal. The modulation signal is used as a signal for modulating an amplitude of laser light emitted by the laser light source unit 30.

The signal processing unit 120 extracts information of fluorescence emitted by the sample 12 with the use of the fluorescence signals emitted from the photoelectric converters 55 and 56. the information of fluorescence emitted by the sample 12 is information about fluorescence intensity and information about fluorescence lifetime. The signal processing unit 120 includes amplifiers 122 and 124 and a phase difference detector 126.

The amplifiers 122 and 124 amplify signals output from the photoelectric converters 55 and 56 and output the amplified signals to the phase difference detector 126.

The phase difference detector 126 detects the phase difference with respect to the modulation signal (reference signal) of the respective fluorescence signals output from the photoelectric converters 55 and 56. The phase difference detector 126 includes an IQ mixer (not illustrated). The IQ mixer multiplies the reference signal by the fluorescence signal to calculate a processing signal including the cos component (real part) and the high-frequency component of the fluorescence signal. The IQ mixer also multiplies a signal, which is obtained by shifting the phase of the reference signal by 90 degrees, by the fluorescence signal to calculate a processing signal including the sin component (imaginary part) and the high-frequency component of the fluorescence signal.

The controller 130 controls the signal generation unit 110 to generate a sinusoidal wave signal having a predetermined frequency. The controller 130 also obtains the cos component and the sin component of the fluorescence signal by removing the high-frequency component from the processing signals including the cos component and the sin component of the fluorescence signal output from the signal processing unit 120.

The controller 130 includes a low-pass filter 132, an amplifier 134, and an A/D converter 136, and a system controller 138. The low-pass filter 132 removes the high-frequency component from the signal including the cos component, the sin component, and the high-frequency component of the fluorescence signal output from the signal processing unit 120. The amplifier 134 amplifies the processing signal of the cos component and the sin component of the fluorescence signal which is a signal obtained by removing the high-frequency component through the low-pass filter 132 and outputs the processing signal to the A/D converter 136. The A/D converter 136 samples the processing signal of the cos component and the sin component of the fluorescence signal and supplies the processing signal to the analysis device 150. The system controller 138 accepts an input of a trigger signal output from the measurement unit 40. The system controller 138 further controls the signal generation unit 112 and the A/D converter 136.

The analysis device 150 calculates fluorescence lifetime, FRET efficiency, shortest fluorescence lifetime, FRET occurrence rate, observation matrix, the concentration of the donor molecule, the concentration of the acceptor molecule, dissociation constant, and so on from the processing signal of the cos component (real part) and the sin component (imaginary part) of the fluorescence signal.

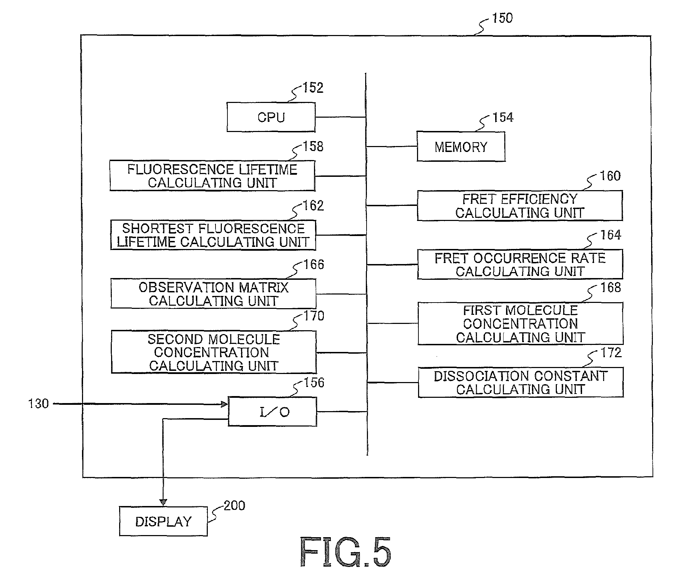

The analysis device 150 is a device that is configured to execute a predetermined program on a computer. FIG. 5 is a schematic configuration diagram of the analysis device 150. As illustrated in FIG. 5, the analysis device 150 includes a CPU 152, a memory 154, an input/output port 156, a fluorescence lifetime calculating unit 158, a FRET efficiency calculating unit 160, a shortest fluorescence lifetime calculating unit 162, a FRET occurrence rate calculating unit 164, an observation matrix calculating unit 166, a first molecule concentration calculating unit 168, a second molecule concentration calculating unit 170, and a dissociation constant calculating unit 172.
The analysis device 150 is connected with a display 200.

The CPU 152 is a calculating processor provided in the computer and substantially executes various calculations required by the fluorescence lifetime calculating unit 158, the FRET efficiency calculating unit 160, the shortest fluorescence lifetime calculating unit 162, the FRET occurrence rate calculating unit 164, the observation matrix calculating unit 166, and the first molecule concentration calculating unit 168, the second molecule concentration calculating unit 170, and the dissociation constant calculating unit 172.
The memory 154 includes a ROM that stores the program executed on the computer to form the fluorescence lifetime calculating unit 158, the FRET efficiency calculating unit 160, the shortest fluorescence lifetime calculating unit 162, the FRET occurrence rate calculating unit 164, the observation matrix calculating unit 166, the first molecule concentration calculating unit 168, the second molecule concentration calculating unit 170, and the dissociation constant calculating unit 172 and a RAM that stores processing results calculated by these units and data supplied from the input/output port 156.

The input/output port 156 accepts the input of values of the cos component (real part) and the sin component (imaginary part) of the fluorescence signal supplied from the controller 130 and also to output processing results calculated by each unit onto the display 200.
The display 200 displays various information and processing results obtained by each unit.

The fluorescence lifetime calculating unit 158 calculates the fluorescence lifetime of the donor molecule by using the fluorescence signal measured by the measurement unit 50. For example, the fluorescence lifetime calculating unit 158 obtains a phase difference of the fluorescence signal to the modulation signal from values of the cos component and the sin component supplied from the controller 130. The fluorescence lifetime calculating unit 158 further calculates the fluorescence lifetime of the donor molecule and the fluorescence lifetime of the acceptor molecule by using the obtained phase difference. More specifically, the fluorescence lifetime calculating unit 158 divides the tan component of the phase difference by an angular frequency of the modulation signal to calculate the fluorescence lifetime. The fluorescence lifetime is expressed as a fluorescence relaxation time constant defined by assuming that the fluorescence components emitted by laser irradiation are based on relaxation responses of first-order lag system.
Furthermore, the fluorescence lifetime calculating unit 158 calculates a fluorescence lifetime $\tau_D$ of the donor molecule at the time of absence of the acceptor molecule, which will be described later, an average fluorescence lifetime $\tau^*_D$ of the donor molecule at the time when FRET occurs, and a fluorescence lifetime $\tau_A$ of the acceptor molecule are calculated.

The FRET efficiency calculating unit 160 calculates a FRET efficiency $E^*$ representing the degree of transfer of energy according to FRET by using the fluorescence lifetime $\tau_D$ of the donor molecule at the time of absence of the acceptor molecule and the fluorescence lifetime $\tau^*_D$ of the donor molecule at the time when FRET occurs calculated by the fluorescence lifetime calculating unit 158. More specifically, the FRET efficiency calculating unit 160 calculates the FRET efficiency $E^*$ defined by the formula (14) described later.

The shortest fluorescence lifetime calculating unit 162 calculates a maximum FRET efficiency $E_{max}$ that is the maximum value of the FRET efficiency $E^*$. As described later, the FRET efficiency $E^*$ is changed by a ratio $\alpha$ between a concentration $C_D$ [M] of the donor molecule in a living cell and a concentration $C_A$ [M] of the acceptor molecule. The shortest fluorescence lifetime calculating unit 162 calculates the maximum FRET efficiency $E_{max}$ by using the results obtained by calculating the FRET efficiency $E^*$ to a plurality of $\alpha$ by the FRET efficiency calculating unit 160.
As illustrated in the formula (18) described later, if the maximum FRET efficiency $E_{max}$ is determined, a shortest fluorescence lifetime $\tau_{Dmin}$ that is the minimum value of the fluorescence lifetime of the donor molecule is also determined, and therefore, the shortest fluorescence lifetime calculating unit 162 calculates the shortest fluorescence lifetime $\tau_{Dmin}$ by using the calculated maximum FRET efficiency $E_{max}$.

The FRET occurrence rate calculating unit 164 calculates the rate $\kappa_{FRET}$ of the donor molecules defined by the formula (7) described later, and the donor molecules are those, which bind to the acceptor molecules and in which FRET occurs, among the donor molecules in a living cell. More specifically, the FRET occurrence rate calculating unit 164 calculates $\kappa_{PRET}$ by using the fluorescence lifetime $\tau_D$ of the donor molecule at the time of absence of the acceptor molecule, the fluorescence lifetime $\tau^*_D$ of the donor molecule at the time when FRET occurs, and the shortest fluorescence

lifetime $\tau_{Dmin}$. More specifically, the FRET occurrence rate calculating unit 164 calculates $\kappa_{FRET}$ based on the formula (49) described later.

The FRET efficiency $E^*$, the maximum FRET efficiency $E_{max}$, the fluorescence lifetime $\tau_D$ of the donor molecule, the fluorescence lifetime $\tau^*_D$ of the donor molecule at the time when FRET occurs, and the shortest fluorescence lifetime $\tau_{Dmin}$ have a relationship represented by the formulae (14) and (18) described later. Thus, the FRET occurrence rate calculating unit 164 can calculate $\kappa_{FRET}$ by suitably using physical quantities equivalent to each other and satisfying the relationships of the formulae (14) and (18).

The observation matrix calculating unit 166 calculates the observation matrix defined by the formula (31) described later. More specifically, a sample in which only the donor molecule is expressed and a sample in which only the acceptor molecule is expressed are irradiated with laser light, and a fluorescence signal is measured, and based on this result, the observation matrix calculating unit 166 calculates the observation matrix from the formulae (40) to (43) described later. A fluorescence signal transmitting through the donor channel and a fluorescence signal transmitting through the acceptor channel are corrected, whereby the observation matrix calculated by the observation matrix calculating unit 166 is used for obtaining information of fluorescence emitted by the donor molecule and information of fluorescence emitted by the acceptor molecule.

The first molecule concentration calculating unit 168 calculates the concentration of the donor molecule in the sample 12 as a living cell by using the information of fluorescence emitted by the donor molecule. More specifically, the first molecule concentration calculating unit 168 calculates the concentration of the donor molecule based on the formula (51) described later.

The second molecule concentration calculating unit 170 calculates the concentration of the donor molecule in the sample 12 as a living cell by using the information of fluorescence emitted by the acceptor molecule. More specifically, the second molecule concentration calculating unit 170 calculates the concentration of the acceptor molecule based on the formula (52) described later.

The dissociation constant calculating unit 172 calculates the dissociation constant $K_d$ as a parameter associated with strength of binding between the donor molecule and the acceptor molecule. More specifically, the dissociation constant calculating unit 172 calculates the dissociation constant $K_d$ by using $\kappa_{FRET}$ calculated by the FRET occurrence rate calculating unit 164, the concentration of the donor molecule calculated by the first molecule concentration calculating unit 168, and the concentration of the acceptor molecule calculated by the second molecule concentration calculating unit 170. More specifically, the dissociation constant calculating unit 172 calculates the dissociation constant $K_d$ based on the formula (20) or (21) described later.

<Summary of FRET measurement method>

Hereinafter, various constants used in the FRET measurement will be described.

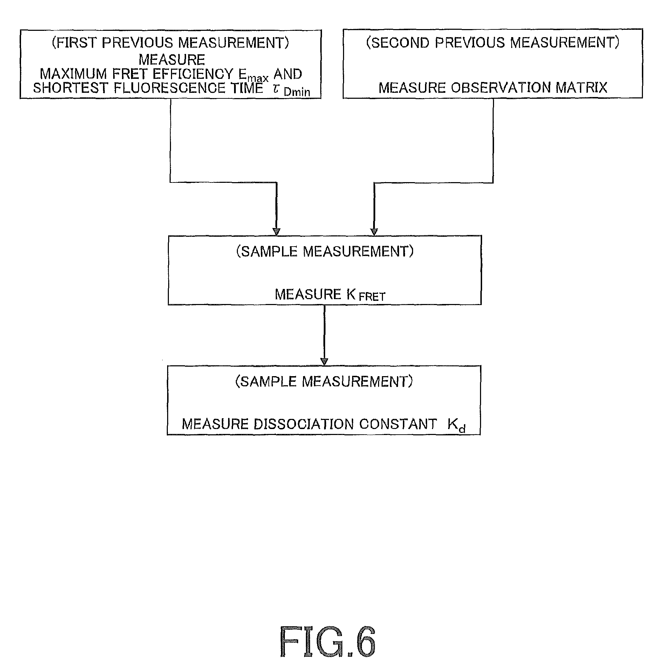

FIG. 6 is a view illustrating an example of the FRET measurement method. As illustrated in FIG. 6, first, in first previous measurement, the maximum FRET efficiency $E_{max}$ and the shortest fluorescence lifetime $\tau_{Dmin}$ are measured. Then, in a second previous measurement, the observation matrix is measured. Next, in sample measurement as main measurement, $\kappa_{FRET}$ that is a ratio of the donor molecules in which FRET occurs among the donor molecules in a measurement sample as a living cell is measured. Next, the dissociation constant $K_d$ representing the degree of binding between the donor molecule and the acceptor molecule is measured by using the measured $\kappa_{FRET}$.

First, a relationship between an output of laser light and the electron number in a fluorescence molecule excited by the laser light will be described. When the electron number in the fluorescence molecule excited per unit time and unit volume is represented by No [$1/m^3s$], No is represented as follows according to Lambert's and Beer's law:

[Formula 1]

$$N_0 \;=\; J_L A (1 - 10^{-\epsilon Cl})/V \qquad (1)$$

wherein $J_L$ [$1/m^2s$] is energy (photon number) per unit volume and unit time of laser light, A [$m^2$] is an area irradiated with laser light, $\epsilon$ [$1/Mm$] is a molar absorbance coefficient of the fluorescence molecule, C [M] is concentration of the fluorescence molecule, 1 [m] is a light path length, and V [$m^3$] is a volume of a obj ect irradiated with laser light.

When the concentration of the fluorescence molecule is sufficiently low, the formula (1) can be approximated as follows:

[Formula 2]

$$N_0 \quad = \quad \ln 10 \cdot J_L \epsilon C \qquad (2)$$

When a wavelength of laser light is $\lambda$ [m] and output is P [W], the following relationship is established:

[Formula 3]

$$J_L A \quad = \quad P\lambda/hc \qquad (3)$$

wherein h [J.s] is a Planck's constant, and c [m/s] is light speed.

It is assumed that the shape of a cross-section of laser light is an ellipse, and intensity distribution is two-dimensional Gaussian distribution. At this time, an average power $J_{ex}$ [1/m²s] is represented as follows. A circular living cell whose diameter is Dc [m] is irradiated with laser light to receive the average power $J_{ex}$ [1/m²s].

[Formula 4]

$$J_{ex}(t) \quad = \quad K_C \cdot J_L(t) = \lambda/hc \cdot K_C / \frac{\pi}{4} D_C{}^2 \cdot P(t) \qquad (4)$$

wherein $K_c$ is a rate of power applied to a living cell to the power of the entire cross section of laser light. $K_c$ is obtained by using an integration method such as a Simpson's rule, for example.

A fluorescence molecule electron number $N_{ex}$ (t) per unit time and unit volume excited by laser light is represented as follows by the formulae (2) and (4):

[Formula 5]

$$N_{ex}(t) \quad = \quad \ln 10 \cdot \epsilon C \lambda/hc \cdot K_C / \frac{\pi}{4} D_C^2 \cdot P(t) \equiv K_{ex} \cdot P(t) \qquad (5)$$

$$K_{exD} \quad \equiv \quad \ln 10 \cdot \epsilon_D C_D \lambda/hc \cdot K_C / \frac{\pi}{4} D_C^2$$

$$K_{exA} \quad \equiv \quad \ln 10 \cdot \epsilon_A C_A \lambda/hc \cdot K_C / \frac{\pi}{4} D_C^2$$

wherein $K_{exD}$ and $K_{exA}$ defined as above are used when the observation matrix is obtained in the second previous measurement, as described later. As described later, $K_{exD}$ and $H_{exA}$ are used when the concentration of the donor molecule and the concentration of the acceptor molecule are obtained. $K_{exD}$ and $K_{exA}$ are stored as constants in the memory 154 and suitably read out.

Since the time (approximately $10^{-15}$ seconds) required for the fluorescence molecule to absorb light and the electrons thereof to transfer to the excited state is sufficiently short in comparison with a light-emitting transfer process (approximately $10^{-9}$ seconds), the time required for the electrons to transfer to the excited state can be ignored.

($\kappa_{FRET}$, FRET efficiency E*, $\alpha$)

Next, a relationship between the transfer process of the excited electrons and $\kappa_{FRET}$, FRET efficiency E*, and $\alpha$ will be described. When the number of electrons in the lowest order excited state is represented by N(t), N(t) satisfies the following relational expression:

[Formula 6]

$$\frac{dN(t)}{dt} \;=\; -(k_f + k_{nr})N(t) + K_{ex}\cdot P(t) \qquad (6)$$

wherein $k_f$ [1/s] is a rate constant of radiative transition, and $K_{nr}$ [1/s] is a rate constant of non-radiative transition. The relational expression (6) is established with respect to the donor molecule and the acceptor molecule. In the following description, an additional character D is added to variables and constants associated with the donor molecule, and an additional character A is added to variables and constants associated with the acceptor molecule.

Next, among the donor molecules in the sample 12 as a living cell, the rate of the donor molecules which bind to the acceptor molecules and in which FRET occurs is defined as $\kappa_{FRET}$. Namely, when the concentration of the donor molecule in a living cell is represented by $C_D$ [M], and the concentration of a molecule in which FRET occurs is represented by $C_{DA}$ [M], $\kappa_{FRET}$ satisfies the following relational expression:

[Formula 7]

$$C_{DA} \;=\; \kappa_{FRET}\cdot C_D \qquad (7)$$

wherein $\kappa_{FRET}$ is a constant in an equilibrium state.

A rate constant of resonance energy transfer according to the occurrence of FRET is represented by $k_t$ [1/s], the number of electrons in the lowest order excited state of the donor molecule is represented by $N_D$ (t), and the number of electrons in the lowest order excited state of the acceptor molecule is represented by $N_A$ (t). Considering the rate constant $k_t$ of resonance energy transfer in the formula (6), the number of excited electrons of the donor molecule in which FRET occurs and the number of excited electrons of the donor molecule in which FRET does not occur are represented as the formulae (8) and (9), respectively.

[Formula 8]

$$\frac{d\kappa_{FRET}N_D(t)}{dt} \;=\; -(k_{fD} + k_{nrD} + k_t)\kappa_{FRET}N_D(t) + \kappa_{FRET}K_{exD}P(t) \qquad (8)$$

$$\frac{d(1 - \kappa_{FRET})N_D(t)}{dt} \;=\; -(k_{fD} + k_{nrD})(1 - \kappa_{FRET})N_D(t) + (1 - \kappa_{FRET})K_{exD}P(t) \qquad (9)$$

wherein, $k_{fD}$ [1/s] represents a rate constant of radiative transition of the donor molecule, $k_{nrD}$ [1/s] represents a rate constant of non-radiative transition of the donor molecule, and $K_{exD}P(t)$ represents the number of electrons in the donor molecule per unit time and unit volume excited by laser light.

Similarly, with regard to the excited electrons in the entire acceptor molecules, the following relational expression is obtained:

[Formula 9]

$$\frac{dN_A(t)}{dt} \;=\; \kappa_{FRET}k_t N_D(t) - (k_{fA} + k_{nrA})N_A(t) + K_{exA}P(t) \qquad (10)$$

wherein, $k_{fA}$ [1/s] represents a rate constant of radiative transition of the acceptor molecule, $k_{nrA}$ [1/s] represents a rate constant of non-radiative transition of the acceptor molecule, and $K_{exA}P(t)$ represents the number of electrons in the acceptor molecule per unit time and unit volume excited by laser light.

When $k_D \equiv k_{fD} + k_{nrD}$, and $k_A \equiv k_{fA} + k_{nrA}$, the differential equation about the number of electrons in the excited state in the donor molecule and the acceptor molecule is represented as follows:

[Formula 10]

$$\frac{d\kappa_{FRET}N_D(t)}{dt} = -(k_D + k_t)\kappa_{FRET}N_D(t) + \kappa_{FRET}K_{exD}P(t) \qquad (11)$$

$$\frac{d(1 - \kappa_{FRET})N_D(t)}{dt} = -k_D(1 - \kappa_{FRET})N_D(t) + (1 - \kappa_{FRET})K_{exD}P(t) \qquad (12)$$

$$\frac{dN_A(t)}{dt} = \kappa_{FRET}k_t N_D(t) - k_A N_A(t) + K_{exA}P(t) \qquad (13)$$

The FRET efficiency E* representing the degree of the energy transfer according to FRET is defined as follows:

[Formula 11]

$$E^* = \frac{\kappa_{FRET}k_t}{k_D + \kappa_{FRET}k_t} \qquad (14)$$

wherein $\tau_D$ represents the fluorescent lifetime of the donor molecule at the time of absence of the acceptor molecule. A relationship between $\tau_D$ and the rate constant is represented as follows;

[Formula 12]

$$\tau_D = \frac{1}{k_D} \qquad (15)$$

The FRET efficiency E* is changed by a ratio between the concentration $C_D$ [M] of the donor molecule in a living cell and the concentration $C_A$ [M] of the acceptor molecule. The ratio $\alpha$ between the concentration $C_D$ [M] of the donor molecule in a living cell and the concentration $C_A$ [M] of the acceptor molecule is defined as follows:

[Formula 13]

$$\alpha \equiv \frac{C_A}{C_D} \qquad (16)$$

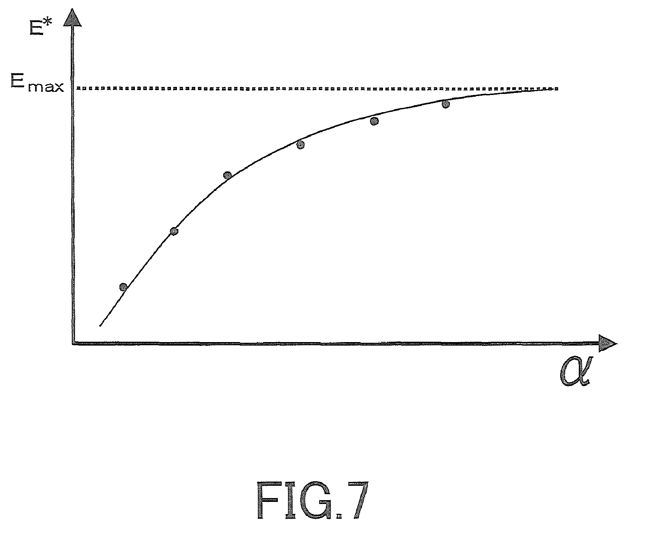

As illustrated in FIG. 7, the FRET efficiency E* is saturated as $\alpha$ increases. This is because it is considered that as $\alpha$ increases, FRET occurs in almost all donor molecules in a living cell. The fact that FRET occurs in all the donor molecules in a living cell means that $\kappa_{FRET}$ is 1. When $\kappa_{FRET} = 1$, the fluorescence lifetime of the donor molecule is referred to as the shortest fluorescence lifetime $\tau_{Dmin}$. A value at which the FRET efficiency E* is saturated is referred to as a maximum FRET efficiency $E_{max}$. The shortest fluorescence lifetime $\tau_{Dmin}$ and the maximum FRET efficiency $E_{max}$ are represented as follows by the formula (14):

[Formula 14]

$$\tau_{Dmin} = \frac{1}{k_D + k_t} \qquad (17)$$

$$E_{max} = \frac{k_t}{k_D + k_t} = 1 - \frac{\tau_{Dmin}}{\tau_D} \qquad (18)$$

(Dissociation constant $K_d$)

Next, the dissociation constant $K_d$ is defined as follows when used as a parameter associated with strength of binding between the donor molecule and the acceptor molecule:

[Formula 15]

$$K_d \equiv \frac{C_{Dfree} \cdot C_{Afree}}{C_{DA}} = \frac{(C_D - C_{DA}) \cdot (C_A - C_{DA})}{C_{DA}} \qquad (19)$$

wherein $C_{Dfree}$ [M] represents the concentration of the donor molecule which does not bind to the acceptor molecules, and $C_{Afree}$ [M] represents the concentration of the acceptor molecule which does not bind to the donor molecule. By virtue of the use of the formulae (7) and (16), the formula (19) can be represented as follows:

[Formula 16]

$$K_d = (1 - \kappa_{FRET}) \cdot (\alpha - \kappa_{FRET}) \frac{C_D}{\kappa_{FRET}} \qquad (20)$$

$$= (1 - \kappa_{FRET}) \cdot (1 - \frac{\kappa_{FRET}}{\alpha}) \frac{C_A}{\kappa_{FRET}} \qquad (21)$$

The formulae mean that the smaller a value of the dissociation constant $K_d$ is, the stronger the binding between the donor molecule and the acceptor molecule is. Accordingly, under such a condition that $\alpha$ is small and the concentration $C_D$ of the donor molecule and the concentration $C_A$ of the acceptor molecule are small, the larger $\kappa_{FRET}$ is, the stronger intermolecular interaction between the donor molecule and the acceptor molecule is.

The dissociation constant $K_d$ is obtained in sample measurement, as illustrated in FIG. 6.

(Observation matrix)

As described above, the observation matrix is used for obtaining the information of fluorescence emitted by the donor molecule and the information of the fluorescence emitted by the acceptor molecule from a fluorescence signal in the donor channel and the acceptor channel.

First, the number of electrons in the excited state are multiplied by a rate constant of radiative transition, whereby the fluorescence amount $F_D$ of the donor molecule and the fluorescence amount $F_A$ of the acceptor molecule are represented by the following relational expression:

[Formula 17]

$$F_D(t) = k_{fD} \cdot N_D(t) = k_{fD} \cdot (\kappa_{FRET} N_D(t) + (1 - \kappa_{FRET}) N_D(t)) \qquad (22)$$

$$F_A(t) = k_{fA} \cdot N_A(t) \qquad (23)$$

When the formulae (22) and (23) are subjected to Laplace transform, and the formulae (11) to (13) subjected to Laplace transform are substituted, Laplace equation of the fluorescence amount $F_D$ of the donor molecule and the fluorescence amount $F_A$ of the acceptor molecule is represented as follows:

[Formula 18]

$$F_D(s) = k_{fD} \left( \frac{\kappa_{FRET}}{s + (k_D + k_t)} + \frac{1 - \kappa_{FRET}}{s + k_D} \right) K_{exD} P(s) \qquad (24)$$

$$F_A(s) = k_{fA} \left( \frac{k_t \kappa_{FRET} K_{exD}}{(s + (k_D + k_t))(s + k_A)} + \frac{K_{exA}}{s + k_A} \right) P(s) \qquad (25)$$

When the fluorescence lifetime of the acceptor molecule is represented by $\tau_A \equiv 1/k_A$, and the formulae (15) and (17) are used, the formulae (24) and (25) are represented as follows:

[Formula 19]

$$F_D(s) = k_{fD}\left(\frac{\kappa_{FRET}\tau_{Dmin}}{1 + \tau_{Dmin}s} + \frac{(1 - \kappa_{FRET})\tau_D}{1 + \tau_D s}\right)K_{exD}P(s) \qquad (26)$$

$$F_A(s) = k_{fA}\left(\frac{k_t\kappa_{FRET}\tau_{Dmin}K_{exD}\tau_A}{(1 + \tau_{Dmin}s)(1 + \tau_A s)} + \frac{K_{exA}\tau_A}{1 + \tau_A s}\right)P(s) \qquad (27)$$

In the present embodiment, a living cell is irradiated with laser light with output P (t) represented by the following formula:

[Formula 20]

$$P(t) = |P|e^{j\omega t} \qquad (28)$$

At this time, when the differential equation in the formulae (26) and (27) is subjected to Laplace transform, and s =jω (s is a Laplace operator), a frequency response is represented as follows:

[Formula 21]

$$\frac{F_D(j\omega)}{P(j\omega)} = k_{fD}K_{exD}\left(\frac{\kappa_{FRET}\tau_{Dmin}}{1 + \tau_{Dmin}\omega j} + \frac{(1 - \kappa_{FRET})\tau_D}{1 + \tau_D \omega j}\right) \qquad (29)$$

$$\frac{F_A(j\omega)}{P(j\omega)} = k_{fA}\left(\frac{\kappa_{FRET}k_t\tau_A}{1 + \tau_A\omega j} \cdot \frac{K_{exD}\tau_{Dmin}}{1 + \tau_{Dmin}\omega j} + \frac{\tau_A K_{exA}}{1 + \tau_A\omega j}\right) \qquad (30)$$

As described above, when fluorescence is measured, a wavelength region is limited by a band-pass filter, and then fluorescence is measured by a photoelectric converter such as a photomultiplier. In FIG. 3, when the fluorescence amount measured through the band-pass filter 53 and the photoelectric converter 55 of the donor channel is represented by $F_{DCh}$ (jω), and the fluorescence amount measured through the band-pass filter 54 and the photoelectric converter 56 of the acceptor channel is represented by $F_{ACh}$ (jω), the following relational expression is established:

[Formula 22]

$$\begin{bmatrix} \frac{F_{DCh}(j\omega)}{P(j\omega)} \\ \frac{F_{ACh}(j\omega)}{P(j\omega)} \end{bmatrix} = \begin{bmatrix} K_{DCh}W_D & K_{DCh}W_{AD} \\ K_{ACh}W_{DA} & K_{ACh}W_A \end{bmatrix} \cdot \begin{bmatrix} \frac{F_D(j\omega)}{P(j\omega)} \\ \frac{F_A(j\omega)}{P(j\omega)} \end{bmatrix} \qquad (31)$$

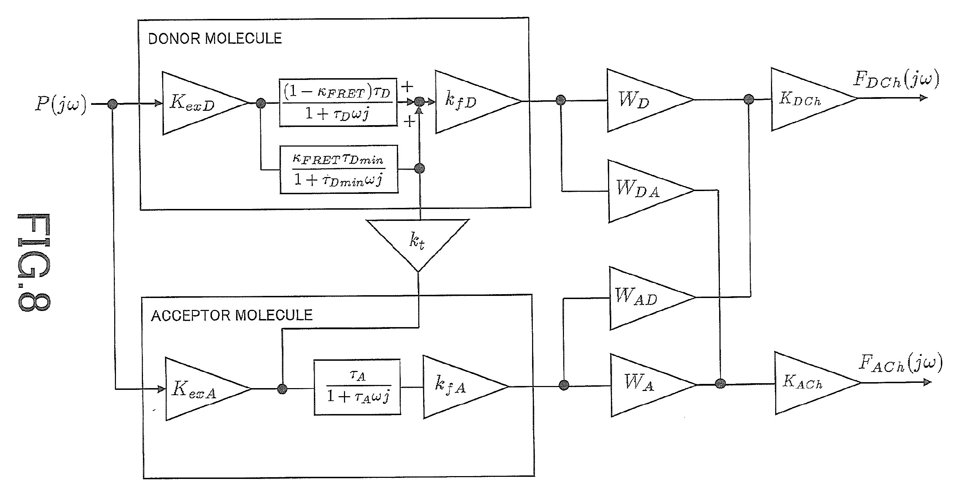

wherein $W_D$ is a weighting factor according to the band-pass filter 53 of the donor channel, and $W_A$ is a weighting factor according to the band-pass filter 54 of the acceptor channel. $W_{AD}$ is a leakage coefficient representing leakage of fluorescence, emitted by the acceptor molecule, into the donor channel, and $W_{DA}$ is a leakage coefficient representing leakage of fluorescence, emitted by the donor molecule, into the acceptor channel. $K_{DCh}$ is a gain including sensitivity of the photoelectric converter 55 of the donor channel, and $K_{ACh}$ is a gain including sensitivity of the photoelectric converter 56 of the acceptor channel. FIG. 8 is a diagram illustrating a model of dynamics of fluorescence emission at the time when FRET occurs. A matrix of two rows and two columns in the formula (31) is hereinafter referred to as an observation matrix.

The formula (31) means that by virtue of the use of the observation matrix, information of fluorescence emitted from the donor molecule or the acceptor molecule can be obtained with high accuracy from the measured fluorescence signals in the donor channel and the acceptor channel.

Hereinafter, a method of obtaining the observation matrix will be described.

First, a sample in which only the donor molecule is expressed is irradiated with laser light, and the fluorescence signal is measured. Since measurement of the fluorescence emitted at that time is the same thing as the fluorescence is measured under such a condition that $\kappa_{FRET} = 0$ and $k_{fA} = K_{exA} = 0$ in the formulae (29) and (30), it is represented by the following formulae:

[Formula 23]

$$\frac{F_D(j\omega)}{P(j\omega)} = \frac{k_{fD}K_{exD}}{s + k_D} = \frac{k_{fD}K_{exD}\tau_D}{1 + \tau_D\omega j} = \frac{k_{fD}\tau_D K_{exD}}{\sqrt{1 + (\tau_D\omega)^2}}e^{j(-\tan^{-1}\tau_D\omega)} \qquad (32)$$

$$\frac{F_A(j\omega)}{P(j\omega)} = 0 \qquad (33)$$

When the formulae (32), (33), and (31) are used, the fluorescence signal measured through a band-pass filter is represented as follows:

[Formula 24]

$$\frac{F_{DCh}(j\omega)}{P(j\omega)} = K_{DCh}W_D \frac{k_{fD}\tau_D K_{exD}}{\sqrt{1 + (\tau_D\omega)^2}}e^{j(-\tan^{-1}\tau_D\omega)} \qquad (34)$$

$$\frac{F_{ACh}(j\omega)}{P(j\omega)} = K_{ACh}W_{DA} \frac{k_{fD}\tau_D K_{exD}}{\sqrt{1 + (\tau_D\omega)^2}}e^{j(-\tan^{-1}\tau_D\omega)} \qquad (35)$$

Similarly, a sample in which only the acceptor molecule is expressed is irradiated with laser light, and the fluorescence signal is measured. Since measurement of the fluorescence emitted at that time is the same thing as the fluorescence is measured under such a condition that $\kappa_t = 0$ and $k_{fD} = K_{exD} = 0$ in the formulae (29) and (30), it is represented by the following formulae:

[Formula 25]

$$\frac{F_D(j\omega)}{P(j\omega)} = 0 \qquad (36)$$

$$\frac{F_A(j\omega)}{P(j\omega)} = \frac{k_{fA}K_{exA}\tau_A}{1 + \tau_A\omega j} = \frac{k_{fA}\tau_A K_{exA}}{\sqrt{1 + (\tau_A\omega)^2}}e^{j(-\tan^{-1}\tau_A\omega)} \qquad (37)$$

When the formulae (36), (37), and (31) are used, the fluorescence signal measured through a band-pass filter is represented as follows:

[Formula 26]

$$\frac{F_{DCh}(j\omega)}{P(j\omega)} = K_{DCh}W_{AD} \frac{k_{fA}\tau_A K_{exA}}{\sqrt{1 + (\tau_A\omega)^2}}e^{j(-\tan^{-1}\tau_A\omega)} \qquad (38)$$

$$\frac{F_{ACh}(j\omega)}{P(j\omega)} = K_{ACh}W_A \frac{k_{fA}\tau_A K_{exA}}{\sqrt{1 + (\tau_A\omega)^2}}e^{j(-\tan^{-1}\tau_A\omega)} \qquad (39)$$

The real parts of the formulae (38) and (39) correspond to the cos component of the fluorescence signal. The imaginary parts of the formulae (38) and (39) correspond to the sin component of the fluorescence signal.

When the quantum yield of the donor molecule is represented by $\phi_D$, and the quantum yield of the acceptor molecule is represented by $\phi_A$, $\phi_D = k_{fD}\tau_D$ and $\phi_A = k_{fA}\tau_A$. When this formula and the formula (5) are used, the respective amplitudes in the formulae (34), (35), (38), and (39) are represented as follows:

[Formula 27]

$$\left|\frac{F_{DCh}(j\omega)}{P(j\omega)}\right| = K_{DCh}W_D \frac{\phi_D \cdot \ln 10 \cdot \epsilon_D \cdot \lambda/hc \cdot K_C/\frac{\pi}{4}D_C^2}{\sqrt{1+(\tau_D\omega)^2}} \cdot C_D \qquad (40)$$

$$\left|\frac{F_{ACh}(j\omega)}{P(j\omega)}\right| = K_{ACh}W_{DA} \frac{\phi_D \cdot \ln 10 \cdot \epsilon_D \cdot \lambda/hc \cdot K_C/\frac{\pi}{4}D_C^2}{\sqrt{1+(\tau_D\omega)^2}} \cdot C_D \qquad (41)$$

$$\left|\frac{F_{DCh}(j\omega)}{P(j\omega)}\right| = K_{DCh}W_{AD} \frac{\phi_A \cdot \ln 10 \cdot \epsilon_A \cdot \lambda/hc \cdot K_C/\frac{\pi}{4}D_C^2}{\sqrt{1+(\tau_A\omega)^2}} \cdot C_A \qquad (42)$$

$$\left|\frac{F_{ACh}(j\omega)}{P(j\omega)}\right| = K_{ACh}W_A \frac{\phi_A \cdot \ln 10 \cdot \epsilon_A \cdot \lambda/hc \cdot K_C/\frac{\pi}{4}D_C^2}{\sqrt{1+(\tau_A\omega)^2}} \cdot C_A \qquad (43)$$

The quantum yields $\phi_D$ and $\phi_A$ can be obtained from literature data or by measurement. A molar absorbance coefficient $\epsilon_D$ of the donor molecule and a molar absorbance coefficient $\epsilon_A$ of the acceptor molecule can be obtained from literature data or by measurement. A wavelength $\lambda$ of laser light is a well-known value. The rate $K_c$ of the power, applied to a living cell, to the power of the entire cross section of laser light and a diameter Dc of a circular living cell can be obtained separately. The fluorescence lifetime $\tau_D$ of the donor molecule at the time of absence of the acceptor molecule and the fluorescence lifetime $\tau_A$ of an acceptor molecule can be obtained using the flow cytometer 10. The information of those numerical values is recorded in the memory 154.

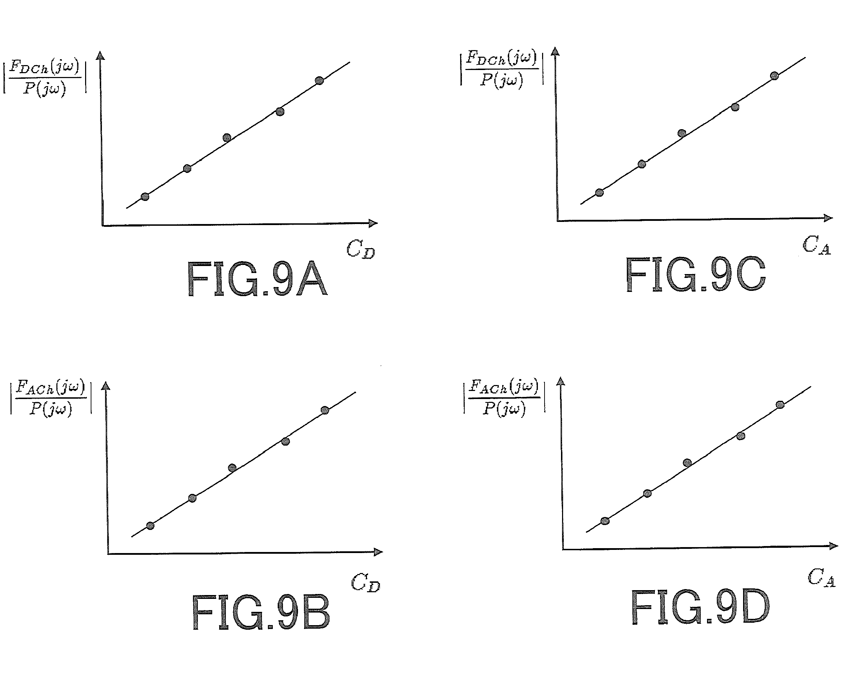

FIG. 9 is a view illustrating an example of results obtained when a sample in which only the donor molecule is expressed and a sample in which only the acceptor molecule is expressed are irradiated with laser light, and the fluorescence signal is measured.

FIG. 9A is a graph illustrating results obtained when the sample in which only the donor molecule is expressed is provided and the fluorescence signal in the donor channel is measured with respect to the concentrations $C_D$ [M] of different donor molecules. The inclination of the graph illustrated in FIG. 9A is obtained, whereby a value of $K_{DCh}W_D$ is obtained from the formula (40). FIG. 9B is a graph illustrating results obtained when the sample in which only the donor molecule is expressed is provided and the fluorescence signal in the acceptor channel is measured with respect to the concentrations $C_D$ [M] of different donor molecules. The inclination of the graph illustrated in FIG. 9B is obtained, whereby a value of $K_{ACh}W_{DA}$ is obtained from the formula (41).

FIG. 9C is a graph illustrating results obtained when the sample in which only the acceptor molecule is expressed is provided and the fluorescence signal in the donor channel is measured with respect to the concentrations $C_A$ [M] of different acceptor molecules. The inclination of the graph illustrated in FIG. 9C is obtained, whereby a value of $K_{DCh}W_{AD}$ is obtained from the formula (42). FIG. 9D is a graph illustrating results obtained when the sample in which only the acceptor molecule is expressed is provided and the fluorescence signal in the acceptor channel is measured with respect to the concentrations $C_A$ [M] of different acceptor molecules. The inclination of the graph illustrated in FIG. 9D is obtained, whereby a value of $K_{ACh}W_A$ is obtained from the formula (43).

The observation matrix can be obtained as described above. The values of the observation matrix are stored in the memory 154 and, in the sample measurement, read from the memory 154 and then used.

(Average fluorescence lifetime $\tau^*_D$ of donor molecule and concentration $C_D$ of donor molecule)

Next, the average fluorescence lifetime $\tau^*_D$ of the donor molecule and the concentration $C_D$ of the donor molecule obtained in the sample measurement will be described.

When the observation matrix is determined, the information of fluorescence emitted by the donor molecule by irradiation with laser light can be obtained from the measured fluorescence signal by using the formula (31). More specifically, fluorescence signals $F_{DCh}(j\omega)/P(j\omega)$ and $F_{ACh}(j\omega)/P(j\omega)$ obtained by measurement are multiplied by inverse matrix of the observation matrix, whereby information $F_D(j\omega)/P(j\omega)$ of fluorescence emitted by the donor molecule can be obtained as follows:

[Formula 28]

$$\left[ \begin{array}{c} \frac{F_D(j\omega)}{P(j\omega)} \\ \frac{F_A(j\omega)}{P(j\omega)} \end{array} \right] = \left[ \begin{array}{cc} K_{DCh}W_D & K_{DCh}W_{AD} \\ K_{ACh}W_{DA} & K_{ACh}W_A \end{array} \right]^{-1} \cdot \left[ \begin{array}{c} \frac{F_{DCh}(j\omega)}{P(j\omega)} \\ \frac{F_{ACh}(j\omega)}{P(j\omega)} \end{array} \right] \quad (44)$$

The formula (29) is represented as follows:

[Formula 29]

$$\frac{F_D(j\omega)}{P(j\omega)} = k_{fD}K_{exD}\sqrt{\frac{\{\tau_D - \kappa_{FRET}(\tau_D - \tau_{Dmin})\}^2 + (\tau_D\tau_{Dmin}\omega)^2}{(1 - \tau_D\tau_{Dmin}\omega^2)^2 + \{(\tau_D + \tau_{Dmin})\omega\}^2}}e^{j(\theta_{D1}-\theta_{D2})} \quad (45)$$

The phase angle component is represented as follows:

[Formula 30]

$$\theta_{D1} = \tan^{-1}\frac{\tau_D\tau_{Dmin}\omega}{\tau_D - \kappa_{FRET}(\tau_D - \tau_{Dmin})} \quad (46)$$

$$\theta_{D2} = \tan^{-1}\frac{(\tau_D + \tau_{Dmin})\omega}{1 - \tau_D\tau_{Dmin}\omega^2} \quad (47)$$

At this time, the average fluorescence lifetime $\tau^*_D$ of the donor molecule at the time when FRET occurs satisfies the following relational expression:

[Formula 31]

$$-\tan^{-1}\tau^*_D\omega = \theta_{D1} - \theta_{D2} \quad (48)$$

$\tau^*_D$ is obtained by the fluorescence lifetime calculating unit 158 by using the formula (48). In the following description, the average fluorescence lifetime $\tau^*_D$ of the donor molecule is referred to simply as the fluorescence lifetime of the donor molecule.

When the formulae (46) to (48) are solved in terms of $\kappa_{FRET}$, the following formula is obtained:

[Formula 32]

$$\kappa_{FRET} = \frac{\tau_D - \dfrac{\tau_D\tau_{Dmin}\omega}{\tan\left(\tan^{-1}\dfrac{(\tau_D + \tau_{Dmin})\omega}{1 - \tau_D\tau_{Dmin}\omega^2} - \tan^{-1}\tau^*_D\omega\right)}}{\tau_D - \tau_{Dmin}} \quad (49)$$

The amplitude information of the formula (45) is represented as follows:

[Formula 33]

$$\left|\frac{F_D(j\omega)}{P(j\omega)}\right| = k_{fD}K_{exD}\sqrt{\frac{\{\tau_D - \kappa_{FRET}(\tau_D - \tau_{Dmin})\}^2 + (\tau_D\tau_{Dmin}\omega)^2}{(1 - \tau_D\tau_{Dmin}\omega^2)^2 + \{(\tau_D + \tau_{Dmin})\omega\}^2}} \quad (50)$$

The concentration $C_D$ [M] of the donor molecule is obtained as follows by $k_{fD}\tau_D = \phi_D$ and the formula (5):

[Formula 34]

$$C_D = \left|\frac{F_D(j\omega)}{P(j\omega)}\right| \cdot \sqrt{\frac{(1-\tau_D\tau_{Dmin}\omega^2)^2 + \{(\tau_D+\tau_{Dmin})\omega\}^2}{\{\tau_D - \kappa_{FRET}(\tau_D - \tau_{Dmin})\}^2 + (\tau_D\tau_{Dmin}\omega)^2}} \cdot \frac{\tau_D}{\phi_D} \cdot \frac{\frac{\pi}{4}D_C{}^2}{\ln 10 \cdot \epsilon_D\lambda/hc \cdot K_C} \qquad (51)$$

$C_D$ is obtained by the first molecule concentration calculating unit 168 by using the formula (51).

(Concentration $C_A$ of acceptor molecule)

As in the calculation of the concentration of the donor molecule, the observation matrix is obtained, whereby the information of fluorescence emitted by the acceptor molecule by irradiation with laser light can be obtained from the measured fluorescence signal by using the formula (31). More specifically, fluorescence signals $F_{DCh}(j\omega)/P(j\omega)$ and $F_{ACh}(j\omega)/P(j\omega)$ obtained by measurement are multiplied by inverse matrix of the observation matrix, whereby information $F_A(j\omega)/P(j\omega)$ of fluorescence emitted by the acceptor molecule can be obtained as illustrated in the formula (44). The concentration $C_A$ [M] of the acceptor molecule at the time when FRET occurs is obtained as follows by the formulae (30) and (5):

[Formula 35]

$$C_A = \left|\frac{F_A(j\omega)}{P(j\omega)} \cdot \frac{1 + \tau_A\omega j}{k_{fA}\tau_A} - \frac{\kappa_{FRET}k_t\tau_{Dmin}K_{exD}}{1 + \tau_{Dmin}\omega j}\right| \cdot \frac{\frac{\pi}{4}D_C{}^2}{\ln 10 \cdot \epsilon_A\lambda/hc \cdot K_C} \qquad (52)$$

The concentration $C_A$ of the acceptor molecule is obtained by the second molecule concentration calculating unit 170 by using the formula (52). Since $K_{exA}$ is a real number, the phase of $K_{exA}$ obtained from the following formula (53) is supposed to be 0:

[Formula 36]

$$K_{exA} = \frac{F_A(j\omega)}{P(j\omega)} \cdot \frac{1 + \tau_A\omega j}{k_{fA}\tau_A} - \frac{\kappa_{FRET}k_t\tau_{Dmin}K_{exD}}{1 + \tau_{Dmin}\omega j} \qquad (53)$$

Whether or not the phase of $K_{exA}$ is 0 is searched, whereby whether or not FRET is correctly evaluated can be confirmed.
Since $\alpha$ is obtained by the formulae (51) and (52), the dissociation constant $K_d$ can be obtained by the formula (20) or (21). The dissociation constant $K_d$ can be obtained by the dissociation constant calculating unit 172.

<FRET measurement method>

In the FRET measurement method of the present embodiment, some parameters are required to be previously measured in order to measure the rate $\kappa_{FRET}$ of the donor molecules, which bind to the acceptor molecules and in which FRET occurs, among the donor molecule in a living cell of the sample 12, and the dissociation constant $K_d$. In the following description, the measurement for obtaining $\kappa_{FRET}$ of the sample 12 and the dissociation constant $K_d$ is referred to as "sample measurement", and measurement previously performed for performing the sample measurement is referred to as "previous measurement". Hereinafter, the previous measurement will be first described.

<Previous measurement>

(Measurement of maximum FRET efficiency $E_{max}$ and shortest fluorescence lifetime $\tau_{Dmin}$)

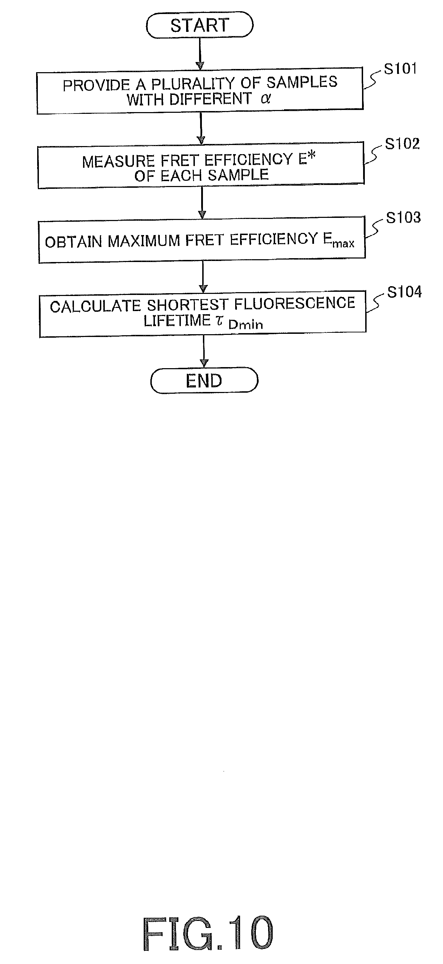

First, as a first previous measurement, the maximum FRET efficiency $E_{max}$ and the shortest fluorescence lifetime $\tau_{Dmin}$ are measured. FIG. 10 is an example of a flowchart for measuring the maximum FRET efficiency $E_{max}$ and the shortest fluorescence lifetime $\tau_{Dmin}$.
First, a plurality of the samples 12 is provided (step S101). The ratio $\alpha$ between the concentration $C_D$ [M] of the donor molecule in a living cell and the concentration $C_A$ [M] of the acceptor molecule defined by the formula (16) is different between the samples 12.

Next, the FRET efficiency E* defined by the formula (14) is measured for each sample 12 with the use of the flow cytometer described with reference to FIG. 1 (step S102). More specifically, the FRET efficiency calculating unit 160 calculates the FRET efficiency E* by using the fluorescence lifetime calculated by the fluorescence lifetime calculating unit 158.

The shortest fluorescence lifetime calculating unit 162 plots the measurement results of the FRET efficiency E* for each sample 12 as illustrated in FIG. 7, and the maximum FRET efficiency $E_{max}$ is obtained from a value to which the FRET efficiency E* approaches asymptotically when $\alpha$ is rendered sufficiently large (step S103).

Next, the shortest fluorescence lifetime calculating unit 162 calculates the shortest fluorescence lifetime $\tau_{Dmin}$ from the formula (18) (step S104). More specifically, the shortest fluorescence lifetime calculating unit 162 calculates the shortest fluorescence lifetime $\tau_{Dmin}$ by using the calculated maximum FRET efficiency $E_{max}$.

According to the present embodiment, in the first previous measurement, the maximum FRET efficiency $E_{max}$ and the shortest fluorescence lifetime $\tau_{Dmin}$ are previously measured, whereby FRET measurement can be quantitatively performed without being influenced by the rate of the concentration of the acceptor molecule to the concentration of the donor molecule.

(Measurement of observation matrix)

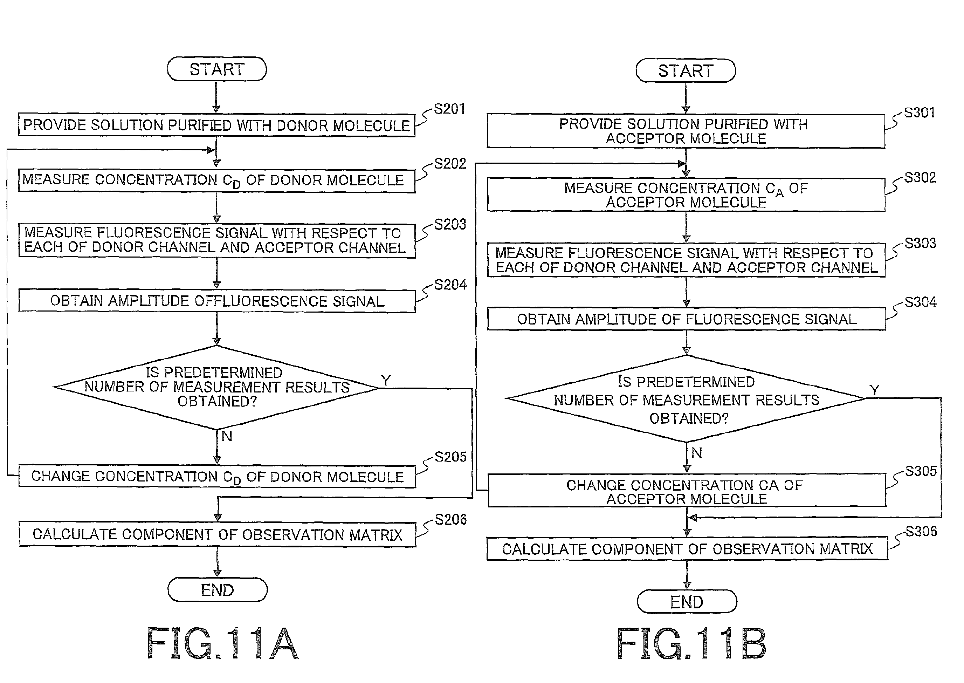

Next, as a second previous measurement, the observation matrix is measured. FIG. 11 is an example of a flowchart for measuring the observation matrix. FIG. 11A illustrates an example of a measurement method using a solution in which the donor molecule is purified and the acceptor molecule is not contained. FIG. 11B illustrates an example of a measurement method using a solution in which the acceptor molecule is purified and the donor molecule is not contained.

As illustrated in FIG. 11A, first, a solution purified with the donor molecule is provided (step S201).

Then, the concentration $C_D$ [M] of the donor molecule is measured by using an absorptiometer (step S202).

Then, the laser light source unit 30 irradiates with laser light with a wavelength (for example, 407 nm) at which the donor molecule mainly absorbs energy, and the measurement unit 50 measures the fluorescence signal with respect to each of the donor channel and the acceptor channel (step S203).

Then, the analysis device 150 obtains the amplitude of the measured fluorescence signal (step S204).

When the analysis device 150 does not obtain a predetermined number (for example, five) of amplitudes of the fluorescence signal, the concentration of the donor molecule is diluted (step S205), and the processing returns to step S202. Afterward, steps S202 to S205 are repeated until the analysis device 150 obtains a predetermined number of amplitudes of the fluorescence signal.

When the analysis device 150 obtains a predetermined number of amplitudes of the fluorescence signal, the observation matrix calculating unit 166 plots the amplitude of the fluorescence signal with respect to the concentration of the donor molecule $C_D$ [M], as illustrated in FIGS. 9A and 9B, and calculates the component of the observation matrix from the inclination based on the formulae (40) and (41) (step S206).

As illustrated in FIG. 11B, a solution purified with the acceptor molecule is provided (step S301).

Then, the concentration $C_A$ [M] of the acceptor molecule is measured by using an absorptiometer (not illustrated) (step S302).

Then, the laser light source unit 30 irradiates with laser light with a wavelength (for example, 407 nm) at which the donor molecule mainly absorbs energy, and the measurement unit 50 measures the fluorescence signal with respect to each of the donor channel and the acceptor channel (step S303).

Then, the analysis device 150 obtains the amplitude of the measured fluorescence signal (step S304).

When the analysis device 150 does not obtain a predetermined number (for example, five) of amplitudes of the fluorescence signal, the concentration of the acceptor molecule is diluted (step S305), and the processing returns to step S302. Afterward, steps S302 to S305 are repeated until the analysis device 150 obtains a predetermined number of amplitudes of the fluorescence signal.

When the analysis device 150 obtains a predetermined number of amplitudes of the fluorescence signal, the observation matrix calculating unit 166 plots the amplitude of the fluorescence signal with respect to the concentration $C_A$ [M] of the acceptor molecule, as illustrated in FIGS. 9C and 9D, and calculates the component of the observation matrix from the inclination based on the formulae (42) and (43) (step S306).

According to the present embodiment, the observation matrix is measured in the second previous measurement, whereby, based on each fluorescence signal in the donor channel and the acceptor channel measured in the sample measurement, the influence of a gain including a weighting factor and a leakage coefficient according to a band-pass filter and sensitivity of a photoelectric converter is reduced, and information of fluorescence emitted by the sample 12 can be obtained with higher accuracy.

The values measured by the previous measurement are stored in the memory 154 and suitably read out in the sample measurement.

<Sample measurement>

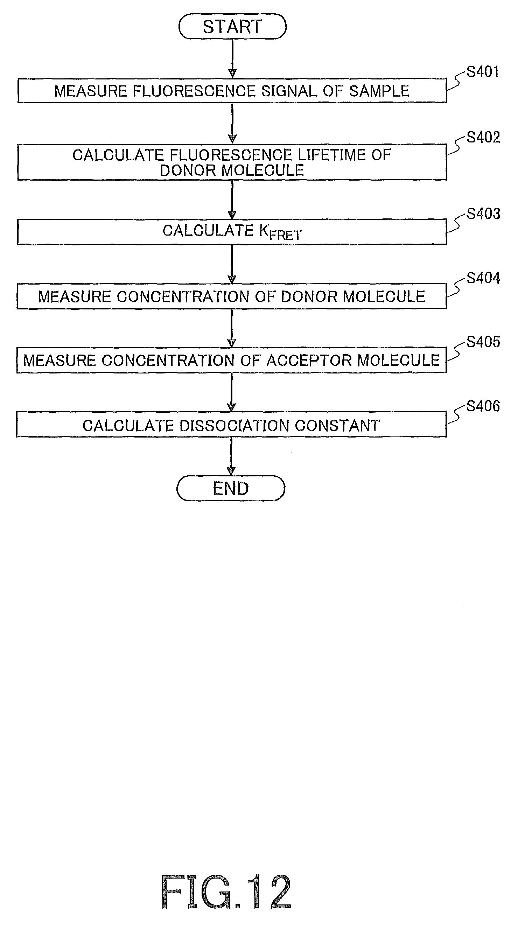

After the termination of the previous measurement, sample measurement as main measurement is performed. FIG. 12 is an example of a flowchart of the sample measurement.

(Measurement of $\kappa_{FRET}$)

First, the sample 12 is irradiated with laser light by using the flow cytometer described with reference to FIG. 1, and fluorescence emitted by the sample 12 is measured, whereby the fluorescence signal is measured with respect to each of the donor channel and the acceptor channel (step S401). This means that the values of $F_{DCh}(j\omega)/P(j\omega)$ and $F_{ACh}(j\omega)/P(j\omega)$ in the formula (44) are measured. Accordingly, as illustrated in the formula (44), $F_{DCh}(j\omega)/P(j\omega)$ and $F_{ACh}(j\omega)/P(j\omega)$ are multiplied by inverse matrix of the observation matrix, whereby the information $F_D(j\omega)/P(j\omega)$ of fluorescence emitted by the donor molecule and the information $F_A(j\omega)/P(j\omega)$ of fluorescence emitted by the acceptor molecule can be obtained.

Then, the fluorescence lifetime calculating unit 158 calculates the fluorescence lifetime $\tau^*_D$ of the donor molecule (step S402). More specifically, the fluorescence lifetime calculating unit 158 calculates the fluorescence lifetime $\tau^*_D$ of the donor molecule based on the formula (48) from a phase difference with respect to the modulation signal of the fluorescence signal output from the photoelectric converter 55.

Then, the FRET occurrence rate calculating unit 164 calculates $\kappa_{FRET}$ by using the fluorescence lifetime $\tau^*_D$ of the donor molecule of the sample 12 measured in step S402 (step S403). More specifically, the FRET occurrence rate calculating unit 164 calculates $\kappa_{FRET}$ based on the formula (49) by using the fluorescence lifetime $\tau^*_D$ of the donor molecule. The shortest fluorescence lifetime $\tau_{Dmin}$ in the formula (49) is obtained in the first previous measurement, and a value read from the memory 154 is used.

According to the present embodiment, since the shortest fluorescence lifetime $\tau_{Dmin}$ is previously measured in the previous measurement, $\kappa_{FRET}$ can be obtained. According to the present embodiment, $\kappa_{FRET}$ whose measurement method has not been known in the related art can be measured. Therefore, the dissociation constant $K_d$ can be obtained by using $\kappa_{FRET}$, which will be described later.

(Measurement of concentration $C_D$ of donor molecule)

Next, the first molecule concentration calculating unit 168 calculates the concentration $C_D$ [M] of the donor molecule of the sample 12 (step S404). More specifically, the first molecule concentration calculating unit 168 calculates the concentration $C_D$ [M] of the donor molecule of the sample 12 based on the formula (51) by using the information of fluorescence emitted by a donor molecule. As illustrated in the formula (44), $|F_D(j\omega)/P(j\omega)|$ in the formula (51) is obtained by multiplying the fluorescence signals $F_{DCh}(j\omega)/P(j\omega)$ and $F_{ACh}(j\omega)/P(j\omega)$ obtained by measurement by inverse matrix of the observation matrix. As the observation matrix, a value obtained in the second previous measurement is used.

(Measurement of concentration $C_A$ of acceptor molecule)

Next, the second molecule concentration calculating unit 170 calculates the concentration $C_A$ [M] of the acceptor molecule of the sample 12 (step S405). More specifically, the second molecule concentration calculating unit 170 calculates the concentration $C_A$ [M] of the acceptor molecule of the sample 12 based on the formula (52) by using the information of fluorescence emitted by the acceptor molecule. As illustrated in the formula (44), $|F_A(j\omega)/P(j\omega)|$ in the formula (52) is obtained by multiplying the fluorescence signals $F_{DCh}(j\omega)/P(j\omega)$ and $F_{ACh}(j\omega)/P(j\omega)$ obtained by measurement by inverse matrix of the observation matrix. As the observation matrix, a value obtained in the second previous measurement is used.

According to the present embodiment, since the observation matrix is previously measured in the previous measurement, the concentration $C_D$ [M] of the donor molecule and the concentration $C_A$ [M] of the acceptor molecule can be obtained with higher accuracy. Further, according to the present embodiment, the dissociation constant $K_d$ can be obtained by using the concentration $C_D$ [M] of the donor molecule and the concentration $C_A$ [M] of the acceptor molecule, as described later.

(Measurement of dissociation constant $K_d$)

Next, the dissociation constant calculating unit 172 calculates the dissociation constant $K_d$ in the sample 12 (step S406). More specifically, the dissociation constant calculating unit 172 calculates the dissociation constant $K_d$ based on the formula (20) or (21) by using $\kappa_{FRET}$ calculated by the FRET occurrence rate calculating unit 164, the concentration $C_D$ [M] of the donor molecule calculated by the first molecule concentration calculating unit 168, and the concentration $C_A$ [M] of the acceptor molecule calculated by the second molecule concentration calculating unit 170.

According to the present embodiment, the dissociation constant $K_d$ whose measurement method has not been known in the related art can be measured as a parameter about the strength of binding between the donor molecule and the acceptor molecule labeling protein in a living cell.

The order from steps S401 to S406 is not limited to the order described with reference to FIG. 12, and the present invention can be practiced if the order may be arbitrarily changed.

The FRET measurement method and the FRET measurement device have been described in detail, but the present invention is not limited to the above-described embodiments. For example, a method including irradiating a measurement sample with laser light whose intensity is modulated with a wavelength having an arbitrary time change and obtaining the fluorescence intensity and the fluorescence lifetime by a spectral analysis method, a Fourier analysis method, a parameter estimation method, and so on may be applicable to the present invention.

Reference Signs List

| | |
|------|------|
| 10 | Flow cytometer |
| 12 | Sample |
| 20 | Tube line |
| 22 | Recovery container |
| 30 | Laser light source unit |
| 40, 50 | Measurement unit |
| 51 | Lens system |
| 52 | Dichroic mirror |
| 53, | 54 Band-pass filter |
| 55, 56 | Photoelectric converter |
| 100 | Control and processing section |
| 110 | Signal generation unit |
| 112 | Oscillator |
| 114 | Power splitter |
| 116, 118 | Amplifier |
| 120 | Signal processing unit |
| 122, 124 | Amplifier |
| 126 | Phase difference detector |
| 130 | Controller |
| 132 | Low-pass filter |
| 134 | Amplifier |
| 136 | A/D converter |
| 138 | System controller |
| 150 | Analysis device |
| 152 | CPU |
| 154 | Memory |
| 156 | Input/output port |
| 158 | Fluorescence lifetime calculating unit |
| 160 | FRET efficiency calculating unit |
| 162 | Shortest fluorescence lifetime calculating unit |
| 164 | FRET occurrence rate calculating unit |
| 166 | Observation matrix calculating unit |
| 168 | First molecule concentration calculating unit |
| 170 | Second molecule concentration calculating unit |
| 172 | Dissociation constant calculating unit |
| 200 | Display |

**Claims**

1. A FRET measurement method, which comprises irradiating with laser light a measurement sample labeled with a first molecule and a second molecule and measuring FRET (Fluorescence Resonance Energy Transfer) in which energy transfers from the first molecule to the second molecule, comprising:

    a shortest fluorescence lifetime calculation step of calculating fluorescence lifetimes of the first molecule with respect to a plurality of previous measurement samples with different ratios between a concentration of the first molecule and a concentration of the second molecule to calculate a fluorescence lifetime minimum value of the first molecule;
    an irradiation step of irradiating the measurement sample with laser light with a time-modulated intensity;
    a measurement step of measuring fluorescence emitted by the measurement sample irradiated with the laser light;
    a step of calculating a fluorescence lifetime of the first molecule by using a fluorescence signal measured in the measurement step; and
    a FRET occurrence rate calculation step of calculating a rate of FRET occurring first molecules among first molecules in the measurement sample with the use of the fluorescence lifetime minimum value of the first molecule calculated in the shortest fluorescence lifetime calculation step and the calculated fluorescence lifetime of the first molecule.

2. The FRET measurement method according to claim 1, wherein in the FRET occurrence rate calculation step, the rate is obtained by further using a fluorescence lifetime of the first molecule at the time of absence of the second molecule.

3. The FRET measurement method according to claim 1 or 2, further comprising an observation matrix calculation step of calculating a matrix used for obtaining, from the fluorescence signal measured in the measurement step, information of fluorescence emitted by the first molecule and information of fluorescence emitted by the second molecule, the first and second molecules emitting fluorescence by irradiation with laser light in the irradiation step, wherein the observation matrix calculation step comprises:

    a first step of obtaining a portion of the component of the matrix by using a fluorescence signal which is measured by irradiating with laser light with a time-modulated intensity a plurality of samples, each sample including the first molecule but not including the second molecule and having different concentrations of the first molecule, and
    a second step of obtaining a portion of the component of the matrix by using a fluorescence signal which is measured by irradiating with laser light with a time-modulated intensity a plurality of samples, each sample including the second molecules but not including the first molecule and having different concentrations of the second molecule.

4. The FRET measurement method according to any one of claims 1 to 3, further comprising a dissociation constant calculation step of calculating a dissociation constant representing the degree of binding between the first molecule and the second molecule with the use of the rate calculated in the FRET occurrence rate calculation step.

5. The FRET measurement method according to any one of claims 1 to 4, wherein in the step of calculating the fluorescence lifetime of the first molecule, the fluorescence lifetime of the first molecule is calculated using a phase difference between the fluorescence signal measured in the measurement step and a modulation signal modulating the laser light.

6. The FRET measurement method according to claim 3, wherein in the first step, each of the plurality of the samples including the first molecule but not including the second molecule and having different concentrations of the first molecule is irradiated with laser light with a time-modulated intensity, and a portion of the component of the matrix is obtained using an amplitude of the measured fluorescence signal and a phase difference between the fluorescence signal and a modulation signal modulating the laser light,
in the second step, each of the plurality of the samples including the second molecule but not including the first molecule and having different concentrations of the second molecule is irradiated with laser light with a time-modulated intensity, and a portion of the component of the matrix is obtained using an amplitude of the measured fluorescence signal and a phase difference between the fluorescence signal and a modulation signal modulating the laser light.

**7.** The FRET measurement method according to claim 4, further comprising:

a first molecule concentration calculation step of calculating the concentration of the first molecule with the use of the information of fluorescence emitted by the first molecule; and

a second molecule concentration calculation step of calculating the concentration of the second molecule with the use of the information of fluorescence emitted by the second molecule,

wherein in the dissociation constant calculation step, the dissociation constant is calculated using the concentration of the first molecule calculated in the first molecule concentration calculation step and the concentration of the second molecule calculated in the second molecule concentration calculation step.

**8.** A FRET measurement device, which measures FRET (Fluorescence Resonance Energy Transfer) in which a measurement sample labeled with a first molecule and a second molecule is irradiated with laser light and energy is transferred from the first molecule to the second molecule, comprising:

a laser light source unit which irradiates the measurement sample with laser light with a time-modulated intensity;

a measurement unit which measures fluorescence emitted by the measurement sample irradiated with the laser light;

a fluorescence lifetime calculating unit which calculates a fluorescence lifetime of the first molecule with the use of a fluorescence signal measured by the measurement unit;

a shortest fluorescence lifetime calculating unit which calculates a fluorescence lifetime minimum value of the first molecule with the use of fluorescence lifetimes of the first molecule in a plurality of previous measurement samples with different ratios between a concentration of the first molecule and a concentration of the second molecule; and

a FRET occurrence rate calculating unit which calculates a rate of FRET occurring first molecules among first molecules in the measurement sample with the use of the fluorescence lifetime minimum value of the first molecule calculated by the shortest fluorescence lifetime calculation unit and the fluorescence lifetime of the first molecule calculated by the fluorescence lifetime calculation unit.

**9.** The FRET measurement device according to claim 8, wherein the FRET occurrence rate calculation unit obtains the rate by further using a fluorescence lifetime of the first molecule at the time of absence of the second molecule.

**10.** The FRET measurement device according to claim 8 or 9, further comprising an observation matrix calculation unit which calculates a matrix used for obtaining, from the fluorescence signal measured by the measurement unit, the information of fluorescence emitted by the first molecule and the information of fluorescence emitted by the second molecule, the first and second molecules emitting fluorescence by irradiating the measurement sample with laser light,

wherein the observation matrix calculation unit

obtains a portion of the component of the matrix with the use of the fluorescence signal which is measured by the measurement unit by irradiating with laser light with a time-modulated intensity a plurality of samples including the first molecule but not including the second molecule and having different concentrations of the first molecule and obtains a portion of the component of the matrix with the use of the fluorescence signal which is measured by the measurement unit by irradiating with laser light with a time-modulated intensity a plurality of samples including the second molecule but not including the first molecule and having different concentrations of the second molecule.

**11.** The FRET measurement device according to any one of claims 8 to 10, further comprising a dissociation constant calculating unit which calculates a dissociation constant representing the degree of binding between the first molecule and the second molecule with the use of the rate calculated by the FRET occurrence rate calculating unit.

**12.** The FRET measurement device according to any one of claims 8 to 11, wherein the fluorescence lifetime calculating unit calculates the fluorescence lifetime of the first molecule with the use of a phase difference between the fluorescence signal measured by the measurement unit and a modulation signal modulating the laser light.

**13.** The FRET measurement device according to claim 10, wherein the observation matrix calculating unit

obtains a portion of the component of the matrix with the use of an amplitude of the fluorescence signal measured by the measurement unit and a phase difference between the fluorescence signal and a modulation signal modulating the laser light, by irradiating with laser light with a time-modulated intensity the plurality of the samples including the first molecule but not including the second molecule and having different concentrations of the first molecule and obtains a portion of the component of the matrix with the use of an amplitude of the fluorescence signal measured by the measurement unit and a phase difference between the fluorescence signal and a modulation signal modulating the laser light, by irradiating with laser light with a time-modulated intensity the plurality of the samples including the second molecule but not including the first molecule and having different concentrations of the second molecule.

**14.** The FRET measurement device according to claim 11, further comprising:

a first molecule concentration calculating unit which calculates the concentration of the first molecule with the use of the information of fluorescence emitted by the first molecule; and

a second molecule concentration calculating unit which calculates the concentration of the second molecule with the use of the information of fluorescence emitted by the second molecule,

wherein the dissociation constant calculating unit calculates the dissociation constant by using the concentration of the first molecule calculated by the first molecule concentration calculating unit and the concentration of the second molecule calculated by the second molecule concentration calculating unit.

SHEATH LIQUID

SAMPLE ~12

20

50

30

40

100

CONTROL
AND
PROCESSING
SECTION

ANALYSIS
DEVICE
(COMPUTER)

150

22

10

# FIG.1

FIG.2

FIG.3

FIG.4

FIG.5

| (FIRST PREVIOUS MEASUREMENT) MEASURE MAXIMUM FRET EFFICIENCY $E_{max}$ AND SHORTEST FLUORESCENCE TIME $\tau_{Dmin}$ | (SECOND PREVIOUS MEASUREMENT) MEASURE OBSERVATION MATRIX |

| (SAMPLE MEASUREMENT) MEASURE $K_{FRET}$ |

| (SAMPLE MEASUREMENT) MEASURE DISSOCIATION CONSTANT $K_d$ |

# FIG.6

FIG.7

FIG.8

EP 2 485 040 A1

$$\left|\frac{F_{DCh}(j\omega)}{P(j\omega)}\right|$$

$C_D$

## FIG.9A

$$\left|\frac{F_{DCh}(j\omega)}{P(j\omega)}\right|$$

$C_A$

## FIG.9C

$$\left|\frac{F_{ACh}(j\omega)}{P(j\omega)}\right|$$

$C_D$

## FIG.9B

$$\left|\frac{F_{ACh}(j\omega)}{P(j\omega)}\right|$$

$C_A$

## FIG.9D

START

PROVIDE A PLURALITY OF SAMPLES
WITH DIFFERENT $\alpha$ — S101

MEASURE FRET EFFICIENCY $E^*$
OF EACH SAMPLE — S102

OBTAIN MAXIMUM FRET EFFICIENCY $E_{max}$ — S103

CALCULATE SHORTEST FLUORESCENCE
LIFETIME $\tau_{Dmin}$ — S104

END

FIG.10

FIG.11A

FIG.11B

START

MEASURE FLUORESCENCE SIGNAL OF SAMPLE — S401

CALCULATE FLUORESCENCE LIFETIME OF DONOR MOLECULE — S402

CALCULATE $K_{FRET}$ — S403

MEASURE CONCENTRATION OF DONOR MOLECULE — S404

MEASURE CONCENTRATION OF ACCEPTOR MOLECULE — S405

CALCULATE DISSOCIATION CONSTANT — S406

END

# FIG.12

<table>
<tr><td colspan="2"><strong>INTERNATIONAL SEARCH REPORT</strong></td><td>International application No.<br>PCT/JP2010/005570</td></tr>
</table>

| A. CLASSIFICATION OF SUBJECT MATTER |
|---|
| *G01N21/64*(2006.01)i, *G01N15/14*(2006.01)i |

According to International Patent Classification (IPC) or to both national classification and IPC

| B. FIELDS SEARCHED |
|---|

Minimum documentation searched (classification system followed by classification symbols)
G01N21/62-21/83, G01N15/00-15/14, G01N33/48-33/98

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus/JMEDPlus/JST7580(JDreamII)

| C. DOCUMENTS CONSIDERED TO BE RELEVANT | | |
|---|---|---|
| Category* | Citation of document, with indication, where appropriate, of the relevant passages | Relevant to claim No. |
| A | Nariyuki NAKATA et al., "Development of fluorescence lifetime FRET flow cytometer", Mitsui Zosen Technical Review, 2007, no.190, pages 54 to 60 | 1-14 |
| A | JP 2007-240424 A (Mitsui Engineering & Shipbuilding Co., Ltd.), 20 September 2007 (20.09.2007), entire text; all drawings (Family: none) | 1-14 |
| A | JP 2002-542453 A (Imperial Cancer Research Technology Ltd.), 10 December 2002 (10.12.2002), entire text; all drawings & WO 2000/08444 A1 & EP 1102977 A1 | 1-14 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01 December, 2010 (01.12.10) | Date of mailing of the international search report<br>14 December, 2010 (14.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

# EP 2 485 040 A1

| INTERNATIONAL SEARCH REPORT | International application No. |
|---|---|
| | PCT/JP2010/005570 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2008/078526 A1 (Olympus Corp.), 03 July 2008 (03.07.2008), entire text; all drawings & JP 2010-57364 A | 1-14 |
| A | Dennis E. Epps et al., A Fluorescence Resonance Energy Transfer Method for Measuring the Binding of Inhibitors to Stromelysin, Analytical Biochemistry, 1999, Vol.275, pp.141-147 | 1-14 |

Form PCT/ISA/210 (continuation of second sheet) (July 2009)

37

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007240424 A